# EUROPEAN PATENT SPECIFICATION

(11) **EP 2 619 964 B1**
(45) Date of publication and mention of the grant of the patent: **07.02.2018**
(21) Application number: 11761556.7
(22) Date of filing: 20.09.2011
(51) Int. Cl.: H04L 29/08, H04L 29/06

(54) **SYSTEMS AND METHODS FOR PEER-TO-PEER IMS**
SYSTEME UND VERFAHREN FÜR PEER-TO-PEER-IMS
SYSTÈMES ET PROCÉDÉS DESTINÉS À UN IMS PARTAGÉ

(30) Priority: 24.09.2010 US 386240 P
(43) Date of publication of application: 31.07.2013
(73) Proprietor: Nexios IT, 1800 Vilvoorde (BE)
(72) Inventor: RUTTEN, Bart, B-1800 Vilvoorde (BE); SAHASRANAMAN, Subramanian, B-1800 Vilvoorde (BE)
(74) Representative: Dickerson, David
(86) International application number: PCT/EP2011/066354
(87) International publication number: WO 2012/038445

(56) References cited:
- EP-A1- 1 564 956
- US-A1- 2002 176 404
- US-A1- 2006 155 814
- "3rd Generation Partnership Project; Technical Specification Group Services and System Aspects; IP Multimedia Subsystem (IMS); Stage 2 (Release 5)", 3GPP STANDARD; 3GPP TS 23.228, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V5.2.0, 1 October 2001 (2001-10-01), pages 1-123, XP050363261,
- "3rd Generation Partnership Project; Technical Specification Group Services and System Aspects; Presence Service; Architecture and Functional Description (Release 6)", 3GPP STANDARD; 3GPP TS 23.141, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V1.0.0, 1 September 2002 (2002-09-01), pages 1-30, XP050362842,

## Description

### BACKGROUND OF THE INVENTION

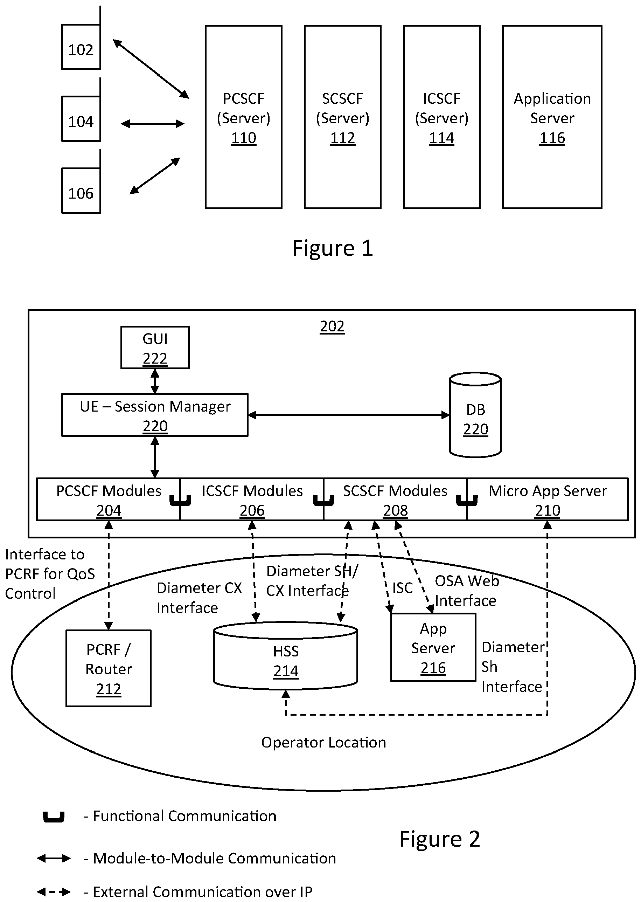

IP multimedia subsystem (IMS) is an architecture for delivering multimedia using Internet Protocol (IP). Figure 1 illustrates a conventional IMS configuration in which IMS functionality for one or more mobile client devices 102-106 is supported by network devices. These devices include a proxy call session control function (PCSCF) server 110, a serving session control function (SCSCF) server 112, an interrogating call session control function (ICSCF) server 114 and an application server 116, which will be referred to herein collectively as IMS servers. The operation of the elements of Figure 1 to provide IMS functionality is well-known to those skilled in the art.

In conventional systems, IMS servers are controlled by the operators. Mobile stations access the IMS servers for voice, video and application processing. Because IMS servers are centralized, communication, scalability, performance, and capability are dependent upon the capacity of the servers. Thus, these servers have to be well maintained as they are prone to single point of failure.

Further information pertaining to the prior art can be found in EP 1 564 956 that discloses a network system integrated with SIP call server and SIP agent client. The network system is provided between a local device and a network for connecting with at least one remote device. The network system includes: at least one local connecting port for coupling with the local device; a remote connecting port for coupling with the network; and an SIP processing module for executing at least one SIP call server program and SIP agent client program. After the local and remote devices perform SIP registry on the SIP call server program, the local and remote devices can telecommunicate with each other by voice from a private SIP telecommunication network. The network system further includes an IP phone connecting port for coupling with at least one IP phone and a voice processing module for converting the voice signal of the IP phone into digital signal and converting the digital signal of the SIP processing module into voice signal. By means of the IP phone, a user can directly telecommunicate with the remote device by voice without registering on external SIP call server.

US 2002/0176404 discloses a network device including a plurality of communication interfaces, including a telephone line interface, a computer data interface, and a broadband network interface; a processor; a machine-readable storage medium which during use stores a call processing application and service profiles, and which stores executable instructions to mediate communications between the plurality of communication interfaces, the instructions causing the network device to detect network signaling events or trigger points in a telephone call and invoke the call processing application in response to the detected network signaling events or trigger points, the call processing application operating according to parameters defined in the service profiles.

US 2006/155814 A1 discloses a network-centric media client that provides SIP and/or IMS capabilities to mobile terminal users. The media client may be incorporated within the mobile terminal, or may be located in a mobile network and accessed remotely by the mobile terminal. Examples of services that may be offered include Push-to-Talk over Cellular, presence and Instant Messaging, video and audio streaming, voice over IP, videoconferencing, interactive gaming, white-boarding and content sharing.

### SUMMARY OF THE INVENTION

The present invention is defined by the independent claims together with their dependent claims. In the present invention the IMS servers are located within the user equipment. Thus, the present invention provides a virtual IMS network inside the user equipment, creates a new kind of grid system and eliminates the need for external servers to support IMS. By providing the IMS servers within the user equipment, the present invention allows peer-to-peer IMS, while still also supporting convention network-based IMS using IMS servers located within the network.

The present invention provides a number of advantages. One advantage is that no server maintenance is required to support peer-to-peer IMS because the signaling and media is peer-to-peer. Accordingly, there is no scalability issue, maintenance cost, and downtime. Another advantage is that individual call processing is provided in which every user can decide and design his communication features and need not depend upon central server capability. The present invention is also fully operator controllable, yet peer-to-peer (i.e., it is operator friendly). The present invention is fully gridded and micro web-service enabled so that users can leverage processing power of other devices (e.g., devices of other users) in order to realize a service. The present invention also virtualizes any environment with session continuity, which allows the user equipment to control the system and the system can be used to access the user equipment. The present invention allows continuance/transferring of a session from a mobile station to a personal computer (PC) anytime and continuance of a session between 3G and Wireless LAN anytime, without dropping the session. This advantage is not possible by existing IMS systems. Moreover, the architecture of the present invention can also co-exist with existing IMS system as the present invention provides full backward compatibility.

Other objects, advantages and novel features of the present invention will become apparent from the following detailed description of the invention when considered in conjunction with the accompanying drawings.

### BRIEF DESCRIPTION FO THE DRAWING FIGURES

Figure 1 is a block diagram illustrating a conventional IMS network;
Figure 2 illustrates an arrangement of user equipment supporting peer-to-peer IMS in accordance with exemplary embodiments of the present invention;
Figure 3 is a block diagram another exemplary arrangement of user equipment supporting peer-to-peer IMS in accordance with exemplary embodiments of the present invention;
Figure 4 is a block diagram illustrating the arrangement of user equipment when operating in a non-peer-to-peer system in accordance with exemplary embodiments of the present invention;
Figure 5A is a block diagram another exemplary arrangement of user equipment supporting peer-to-peer IMS in accordance with exemplary embodiments of the present invention;
Figures 5B, 6 and 7 are a block diagrams illustrating the operation of user equipment in a dual mode system in accordance with exemplary embodiments of the present invention;
Figure 8 is a block diagram illustrating the architecture of user equipment in accordance with exemplary embodiments of the present invention;
Figures 9 through 24 are call flow diagrams illustrating message flow sequences in accordance with exemplary embodiments of the present invention;
Figure 25 is a block diagram of a system in accordance with exemplary embodiments of the present invention;
Figures 26-28 are block diagrams illustrating a variety of network architectures in accordance with exemplary embodiments of the present invention;
Figure 29 is a block diagram illustrating a variety of functions supported by the application server in accordance with the present invention;
Figure 30 is a block diagram of a protocol stack in accordance with exemplary embodiments of the present invention;
Figures 31-35 are block diagrams illustrating a variety of queuing techniques in accordance with exemplary embodiments of the present invention;
Figure 36 is a block diagram illustrating uplink and downlink schedulers in accordance with exemplary embodiments of the present invention;
Figure 37 is a block diagram illustrating the operation of the scheduler in accordance with exemplary embodiments of the present invention;
Figure 38 is a block diagram illustrating the handling of an ARQ process in accordance with exemplary embodiments of the present invention; and
Figure 39 is a block diagram of an exemplary collaborative computing platform in accordance with exemplary embodiments of the present invention.

### DETAILED DESCRIPTION OF THE PREFERRED EMBODIMENTS

For ease of explanation, the following discussion of the present invention refers to the user equipment, which can include, among other things, telephones, mobile telephones, IP telephones, televisions, PCs, PC servers, and/or any apparatus that can be connected to internet directly or indirectly for the purpose of communication. Unless the description specifically identifies functionality as being specific to a particular type of user equipment, it should be understood that reference to a particular type of user equipment is merely exemplary and that the discussion is equally applicable to other types of user equipment. Moreover, one skilled in the art will recognize that user equipment is different from network-based components. Thus, for example, the following describes user equipment being configured with components to achieve various IMS functionality, which is different from these components that are based in the network itself.

### User Equipment for Peer-to-Peer IMS

The present invention adopts IP Multimedia System (IMS - 3GPP) based architecture and supports both 3GPP as well as common IMS architecture based on TISPAN, i.e., TIPHON (Telecommunications and Internet Protocol Harmonization over Networks) and SPAN (Services and Protocols for Advanced Networks). Specifically, as illustrated in Figure 2, in the present invention an IMS Pico network is a compressed IMS network co-located in a single system/device. As illustrated in Figure 2, the user equipment 202 includes PCSCF modules 204, ICSCF modules 206, SCSCF modules 208 and a micro application server 210. These modules 205-208 and server 210 can be physical modules or functional modules, such as processor-executable code that is loaded into a processor from a non-transitory memory. Additionally, the modules can be embodied as a processor in an application specific integrated circuit (ASIC) and/or field programmable gate array (FPGA). As will be described in more detail below, these modules and the application server allow peer-to-peer IMS without necessarily requiring IMS components within the network. Thus, in accordance with the present invention, various components of IMS are located in the system and they interact within each other using internal fast message queue communication.

The PCSCF modules 204 perform Quality of Service (QoS) control by communicating with policy charging and rules function (PCRF)/router 212. THE ICSCF modules 206 and SCSCF modules 208 include a Diameter Cx interface to the home subscriber server (HSS) 214. SCSCF modules 208 also include an IMS service control (ISC) module interface, an open service architecture (OSA) interface web interface to network-based application server (AS) 216. The micro app server 210 includes a Diameter Sh interface to the HSS 214. These modules are controlled by user equipment session manager 220 to provide peer-to-peer IMS functionality.

In addition to the modules discussed above that allow peer-to-peer IMS functionality in accordance with the present invention, the user equipment 202 includes a database 220 and graphical user interface 222, which are conventional components of user equipment, the operation of which would be readily understood by a person of ordinary skill in the art.

Providing the PCSCF modules 204, ICSCF modules 206, SCSCF modules 208 and a micro application server 210 as function embedded in the user equipment allows the present invention to provide IMS functionality based on micro Grid in a peer-to-peer client. The combination of elements 204-210 can thus be collectively referred to as an IMS server. This can be used in systems for communication in a communication module of an existing or a new system. The system allows cost-effective communication without a need of a central exchange and at the same time can be controlled, operated, billed, blocked, stopped, and intercepted by regulatory agencies.

The PCSCF modules 204, ICSCF modules 206, SCSCF modules 208 and a micro application server 210 operate together to process a call at the user equipment and can contact HSS or AAA at the network end. The complete network components to support IMS functionality are compressed and kept at the user equipment side, and thus each user equipment becomes a micro IP multimedia exchange. The exchange has the capability to negotiate with its peer regarding its capability and has the ability to share the capability with other peers. In this model the exchange becomes a grid as well as a peer-to-peer client.

The access component (i.e., the Session Manager) is responsible for providing service and routing the user request to either internal or external interrogator server or serving call and session control server. Every peer can discover its other peer and exchange their capabilities using the SIP proxies.

The present invention allows one user to log into two devices and seamlessly have multiple sessions and can transfer the session across device to achieve fixed mobile convergence. Because SIP is Application Layer protocol designed to be independent of the underlying Transport Layer, it can run on Transmission Control Protocol (TCP), User Datagram Protocol (UDP), or Stream Control Transmission Protocol (SCTP). Accordingly, the SIP proxies track of user whereabouts and when a user logs into two devices, the sessions can be linked and taken over by underlying Transport Layers, which achieves the fixed-mobile convergence. Moreover, all user equipment arranged in accordance with the present invention performs a check with the HSS or AAA server on the authentication of the call and provides accounting details on details of traffic flow through an encrypted mechanism and gets the peer information. The server containing AAA can reject the call or stop an ongoing call or can enforce a business logic which will divert all calls to another user or peer or a traditional exchange.

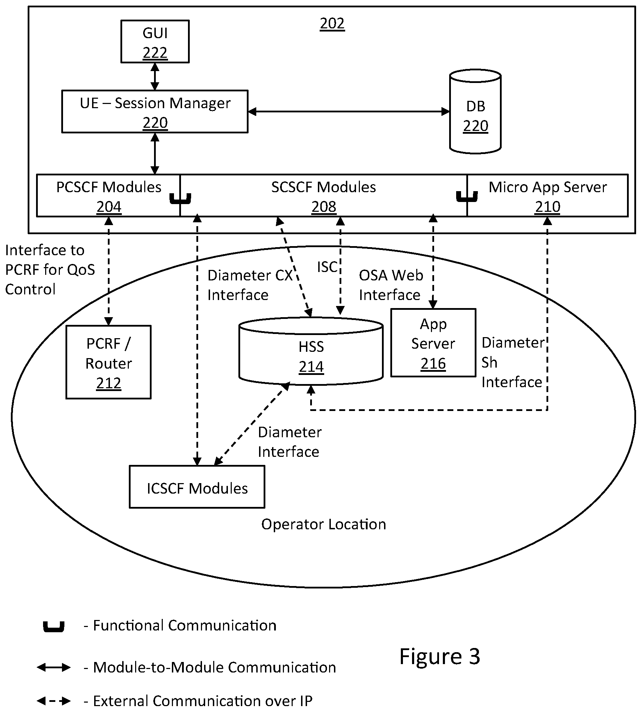

Figure 3 is a block diagram illustrating an alternative arrangement providing IMS peer-to-peer functionality. In the arrangement of Figure 3 the ICSCF is involved only for registration and handling visiting subscribers. Accordingly, the ICSCF functionality can reside in the network instead of being placed in the user equipment. Similar to that described above in connection with Figure 2, the user equipment modules and server can be physical modules or functional modules, such as processor-executable code that is loaded into a processor from a non-transitory memory. Additionally, the modules can be embodied as a processor in an application specific integrated circuit (ASIC) and/or field programmable gate array (FPGA).

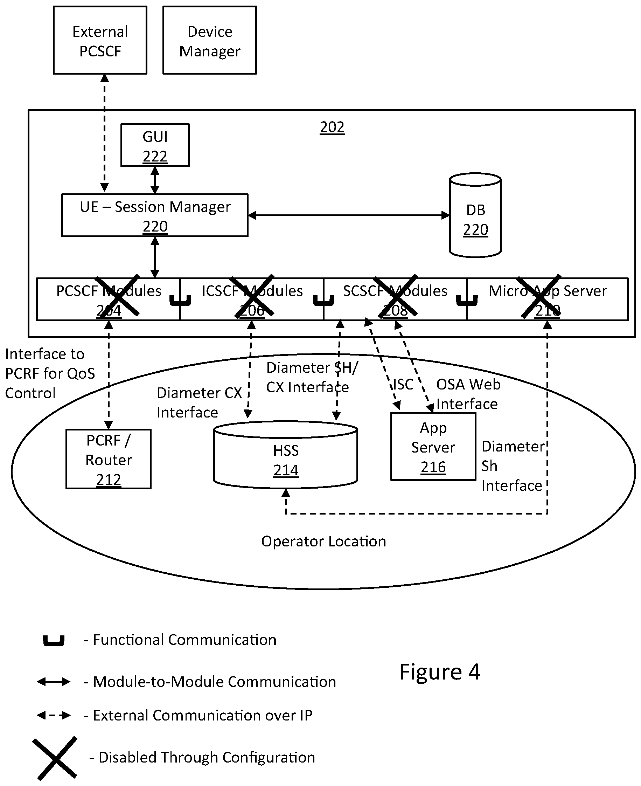

Figure 4 is a block diagram illustrating the arrangement of user equipment when operating in a non-peer-to-peer system. As illustrated in Figure 4, the PCSCF, ICSCF and SCSCF modules and the micro application server within the user equipment are disabled. Accordingly, the session manager communicates with an external PCSCF to support IMS functionality. Again, similar to that described above in connection with Figure 2, the user equipment modules and server can be physical modules or functional modules, such as processor-executable code that is loaded into a processor from a non-transitory memory. Additionally, the modules can be embodied as a processor in an application specific integrated circuit (ASIC) and/or field programmable gate array (FPGA).

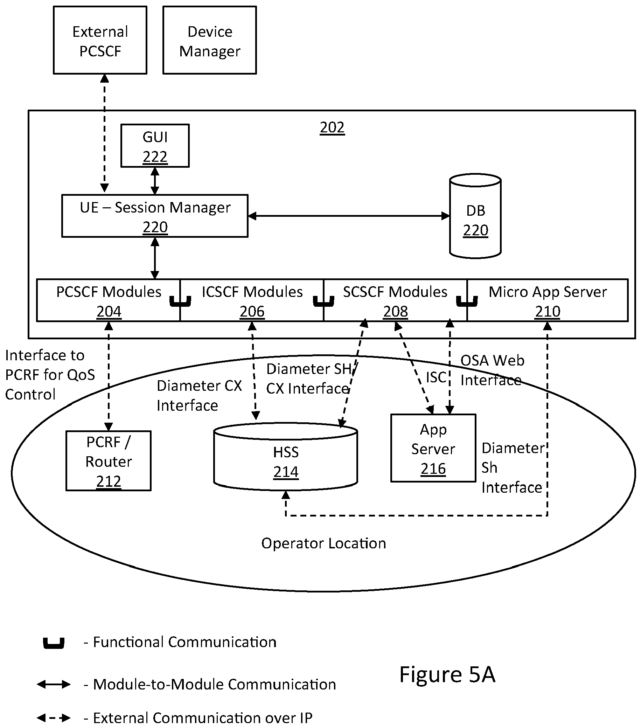

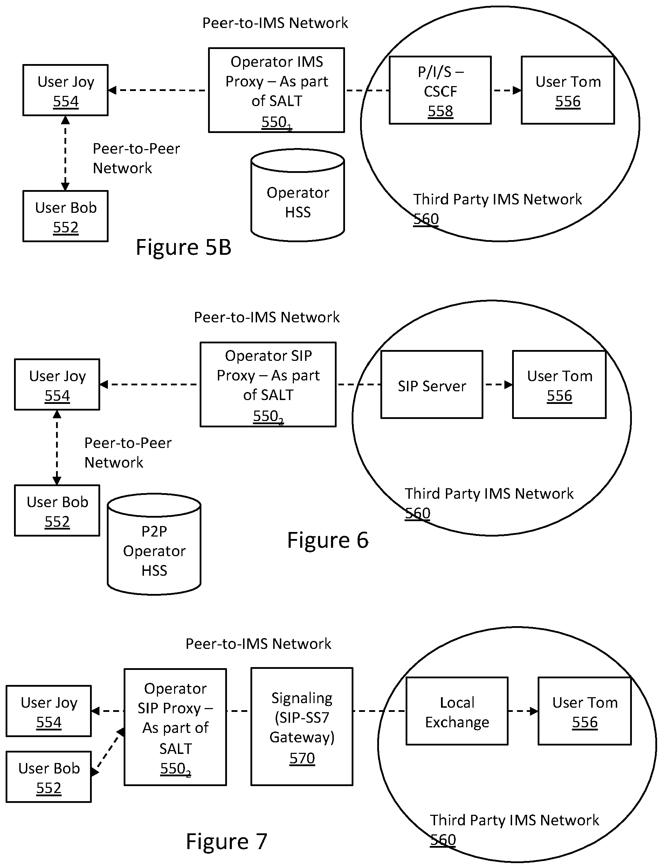

Figures 5A and 5B illustrate the operation of user equipment in a dual mode system, such that both peer-to-peer and network-based IMS functionality can be achieved. Thus, Figure 5A is essentially a combination of Figures 2 and 4. In Figure 5B, three users are having a conference, two users in the same peer-to-peer network (i.e., user Bob 552 and User Joy 554) and another user at a different IMS (i.e., User Tom 556). The IMS Proxy 550₁ is a server connecting the peer-to-peer IMS network to a third party IMS network 560. IMS Proxy 550₁ will be seen by other IMS networks as conventional IMS network. In accordance with the present invention, the dual mode user equipment, which in this example is User Joy 554, contacts the IMS Proxy 550₁ in order to communicate with third party IMS server 558. The present invention can have a simultaneous dual mode state where the present invention will communicate with third-party IMS-based user equipment through an IMS proxy and at the same time can communicate peer-to-peer, including communications such as conference or video, audio broadcasting or multi-instant messaging sessions.

Figure 6 illustrates a similar arrangement to that of Figure 5B, except that it supports peer-to-peer using a session initiation protocol (SIP) proxy 550₂ for voice conferencing between Joy, Bob and Tom. Figure 7 illustrates the present invention connecting to public land mobile network (PLMN) connections, using a SIP route method. In particular, this figure illustrates the connections using a SIP/Media gateway 570 for voice conferencing between Joy, Bob and Tom.

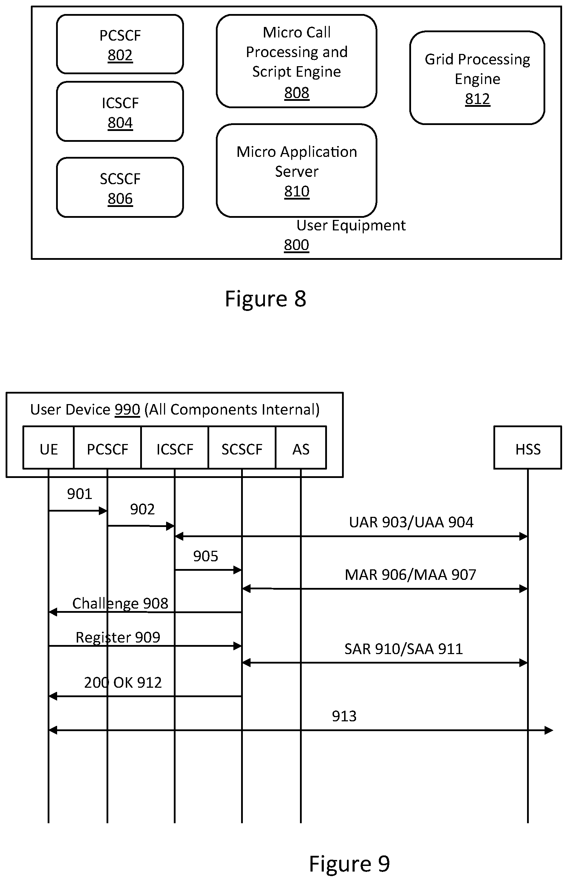

Figure 8 illustrates the architecture of user equipment 800 in accordance with exemplary embodiments of the present invention. The user equipment includes a PCSCF 802, ICSCF 804, SCSCF 806, micro call processing and scripting engine 808, a micro application server 810 and grid processing engine 812. Elements 802-806 and 810 have been described above in connection with Figures 2-5 and operate in a similar manner to that described above. As can be seen in Figure 8, a complete network is placed into a small system, such as a client, which makes the client intelligent and a peer-to-peer differential grid.

Micro call processing and script engine 808 and grid processing engine 812 operate together to allow peer user equipment to operate in a variety of different modes. One mode is the equal share mode in which every peer uses its processing power and memory for processing its call, and the load is equally shared by all peers. Another mode is a capability-based share mode in which, depending upon the capability of the peer, either one or more peer takes additional responsibility for call processing. Yet another mode is an acting server mode in which one peer acts like a server and processes all calls. A further mode is an origination peer mode in which a peer originates a call and when he/she includes other party in a call he/she provides an encryption key that is used throughout the call or during partial part of the call to ensure other users do not enter the call without the originating peer's permission. Another mode is a sharing business logic mode in which the origination peer also distributes the business logic to other peers depending on how the call has to be handled. The original peer can distribute or change the business logic at any time of the call in order to modify the behavior of every peer. A further mode is a modifying process sharing mode in which, during a call, the originating peer can obtain the performance feedback of the peer, and based on the obtained feedback can modify the functionalities of the peer in terms processing, storage and memory usage. It also has the privilege to shift the responsibility from one peer to another.

Figures 9 through 24 illustrate exemplary message flow sequences in accordance with the present invention. In these figures the user equipment are those that are arranged as illustrated in Figures 2, 3, 5A and/or 8, and the element in Figures 9 through 24 labeled "UE" should be understood as the UE Session manager described above in connection with Figures 2-5A and 8. Again, it should be noted that compared to conventional IMS architectures requiring mostly network-based elements, the PCSCF, ICSCF, SCSCF and application server are located in the user equipment, and thus the call flows are different from conventional IMS architectures.

Figure 9 illustrates an exemplary registration scenario. Initially, a register message is sent from the user equipment to the PCSCF (step 901), which then sends a register message to the ICSCF (step 902). The ICSCF performs SCSCF discovery with the operator's HSS (step 903) and the operator's HSS responds with the resolved SCSCF for that user (step 904). The ICSCF forwards the register message to the resolved SCSCF (step 905), which then queries for authorization credentials using a multimedia authentication request (MAR) (step 906) and the HSS responds with the authorization credentials via a multimedia authentication answer (MAA) (step 907).

The SCSCF sends the challenge to the user equipment via the same path used in the registration message (step 908) and the user equipment responds with the Register message, including the credentials, to the SCSCF in the same path as used before (step 909). After comparing the credentials, and assuming that they match, the SCSCF sends a request for the initial filter criteria (IFC) from the HSS using a SAR message (step 910). The HSS responds with the SAA message which contains the IFC for that user (step 911). After a successful download of the IFC, the SCSCF sends a 200 OK message to the client using the same path taken during the registration message (step 912). The SCSCF performs a third party registration to the application server, both internally and to a third party application server (step 913).

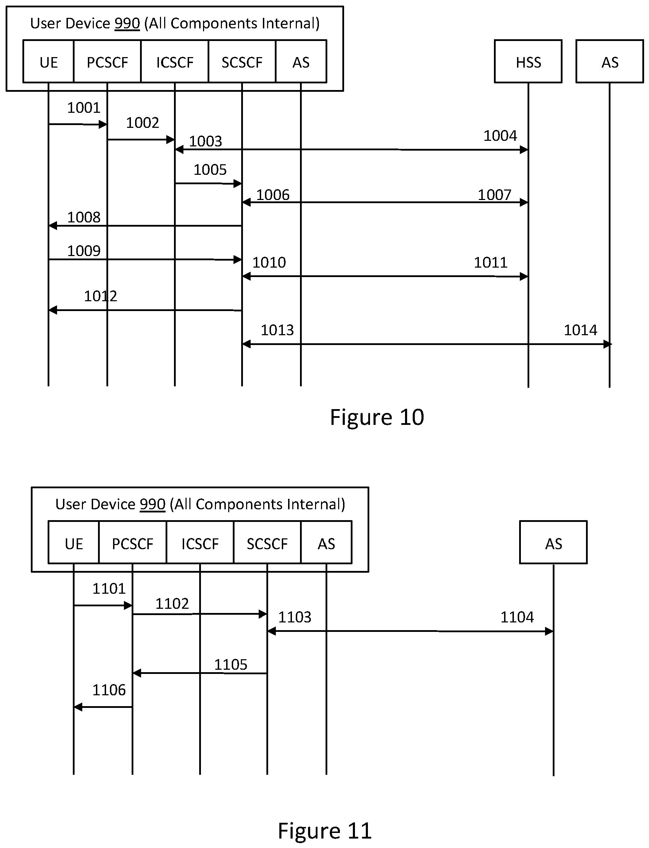

Figure 10 illustrates another registration scenario in accordance with exemplary embodiments of the present invention. Initially, a register message is sent from the user equipment to the PCSCF (step 1001) and the register message is then sent to the ICSCF (step 1002). The ICSCF performs a SCSCF discovery with the operator's HSS (step 1003) and the operator's HSS responds with the resolved SCSCF for that user (step 1004).

The ICSCF forwards the register message to the resolved SCSCF (step 1005). The SCSCF queries for authorization credentials via a MAR request (step 1006) and the HSS responds with authorization credentials via a MAA response (step 1007). The SCSCF sends the challenge to the user equipment using the same path used for the registration message (step 1008) and the user equipment responds with the register message, including the credentials, to the SCSCF in the same path as used before (step 1009). After comparing the credentials and assuming a success, the SCSCF will send a request for the initial filter criteria (IFC) from the HSS using an SAR message (step 1010), and the HSS responds with the server assignment answer (SAA), which contains the IFC for that user (step 1011).

After a successful download of the IFC, the SCSCF sends a 200 OK message to the client using the same path taken during the register message (step 1012). The SCSCF performs a third party registration to the application server, including both an internal and third party application server (step 1013). The application server responds with a 200 OK response for that registration message (step 1014).

Figure 11 illustrates a call flow for presence and ability management. Initially a Subscribe message is sent from the user equipment to the PCSCF (step 1101), and the Subscribe message is forwarded to the SCSCF by the PCSCF (step 1102). The SCSCF forwards the message to a presence and availability management application server (step 1103), which responds to the subscribe message and sends the buddy information to the SCSCF for that user (step 1104). This information is transferred to the PCSCF by the SCSCF (step 1105), and the PCSCF forwards this to the user equipment (step 1106). It should be noted that the presence and availability management application server messages use Open Service Access- (OSA-) based web service calls for obtaining the presence and availability management.

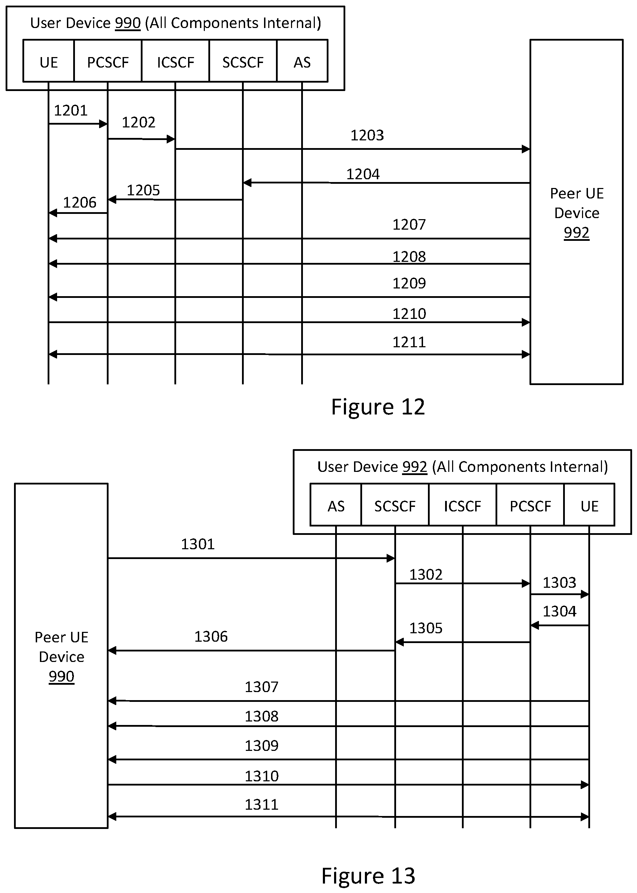

Figure 12 illustrates an exemplary call establishment scenario for a peer-to-peer call initiated by user equipment 990 intended for user equipment 992. Although not illustrated, it should be recognized that the call terminating user equipment (i.e., the peer device) 992 is configured to include the PCSCF, ICSCF, SCSCF and application server in a similar manner to that of the call initiating user equipment 990. Initially, the user equipment initiating the connection 990 sends an INVITE message for call establishment to the PCSCF (step 1201), and the PCSCF sends the INVITE message to the ICSCF (step 1202). The ICSCF uses the information obtained from the presence and availability management application server response obtained using the call flow of Figure 11, and sends the INVITE message to the peer SCSCF, which is internally located in the user equipment device 992 (step 1203). The SCSCF of user equipment 992 forwards a 183 Session Progress message to the SCSCF of user equipment 990 (step 1204). The SCSCF forwards the Session Progress message to the PCSCF of user equipment 990 (step 1205), and the PCSCF forwards the Session Progress message to the mobile originated user equipment (step 1206). Next, session negotiation procedures are performed, including PRACK/UPDATE/PRACK, (step 1207). A 180 Ringing message is then sent from the SCSCF of user equipment 992 to user equipment 990 via the same path as the previous transactions (step 1208), and a 200 OK message is sent from the SCSCF of user equipment 992 to user equipment 990 using the path of the previous transactions (step 1209). An ACK message is sent from the user equipment 990 to the SCSCF of user equipment 992 via the path of the previous transaction (step 1210) and a media path is established with the user equipment 990 (step 1211). It should be noted that there is no media server involved in the media path.

Figure 13 illustrates another call establishment scenario for a mobile terminated call in accordance with the present invention. Specifically, this call flow illustrates the processing performed within the call terminating user equipment. Although not illustrated, it should be recognized that the call originating user equipment 990 is configured to include the PCSCF, ICSCF, SCSCF and application server as illustrated in Figure 12.

Initially, the SCSCF of the user equipment 990 sends an INVITE message for call establishment to the SCSCF of user equipment 992 (step 1301). The SCSCF sends the INVITE message to the PCSCF of user equipment 992 (step 1302), and the PCSCF sends the INVITE message to user equipment 992 (step 1303). The user equipment sends a 183 Session Progress message to the PCSCF (step 1304), which forwards the Session Progress message to the SCSCF (step 1305). The SCSCF forwards the Session Progress message to the SCSCF of user equipment 990 (step 1306). Next, session negotiation procedures are performed, including 200 OK messages for PRACK/UPDATE/PRACK (step 1307). A 180 Ringing message is then sent from the SCSCF of user equipment 992 to the SCSCF of user equipment 990 via the path of the previous transactions (step 1308), and a 200 OK message is sent from the SCSCF of user equipment 992 to the SCSCF of user equipment 990 via the path of the previous transactions (step 1309). An ACK message is sent from the SCSCF of user equipment 990 to user equipment 992 via the path of the previous transaction (step 1310), and a media path is established with the user equipment 992 (step 1311). Again, it should be noted that there is no media server involved in the media path.

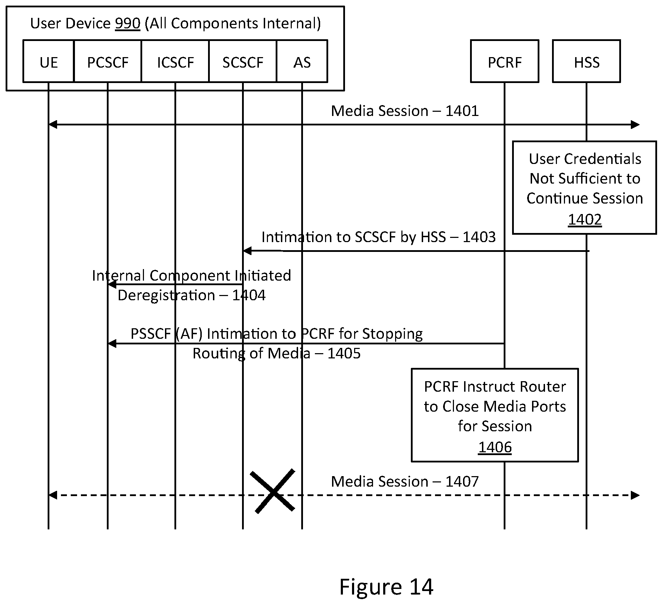

Figure 14 illustrates an exemplary call flow for a de-registration in a network initiated scenario. As illustrated in Figure 14, when, during an established media session (step 1401), it is determined that user credentials are not sufficient for the session to continue (step 1402), the HSS sends an INTIMATION message to the SCSCF of user equipment 990 (step 1403), which initiates deregistration by sending a message to the PCSCF of user equipment 990 (step 1404). Additionally, the PCRF sends an INTIMATION message to the PCSCF of user equipment 990 to stop the routing of the media (step 1405). The PCRF then instructs the router to close the media port for the session (step 1406) and the media session is terminated (step 1407).

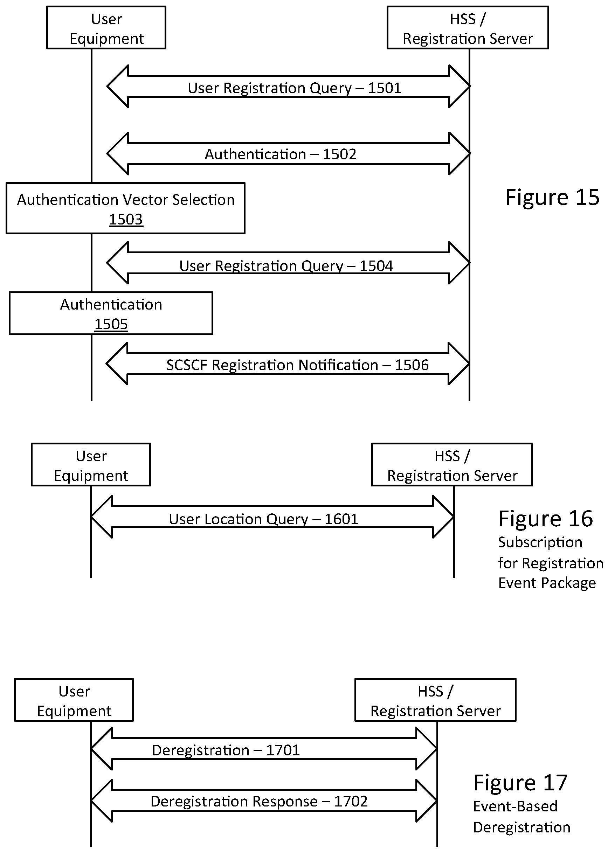

Figure 15 illustrates exemplary user registration signaling that is performed when the user is not registered in accordance with the present invention. Initially the user equipment performs a user registration query (step 1501) and an authentication (step 1502) with the HSS/registration server. The user equipment then selects an authentication vector (step 1503) and performs a user registration query with the HSS/registration server (step 1504). Next the user equipment performs authentication (step 1505) and sends a SCSCF registration notification to the HSS/registration server (step 1506). Those skilled in the art will recognize that the double ended arrows containing text in this figure represent a number of SIP messages, which are combined in the figure for ease of understanding.

Figure 16 illustrates an exemplary subscription in accordance with the present invention. This involves the user equipment performing a user location query with the HSS/registration server (step 1601). Those skilled in the art will recognize that the double ended arrow containing text in this figure represent a number of SIP messages, which are combined in the figure for ease of understanding.

Figure 17 illustrates an exemplary event-based de-registration in accordance with the present invention. The user equipment sends a de-registration message to the HSS/registration server (step 1701), which responds with a de-registration response (step 1702). Those skilled in the art will recognize that the double ended arrows containing text in this figure represent a number of SIP messages, which are combined in the figure for ease of understanding.

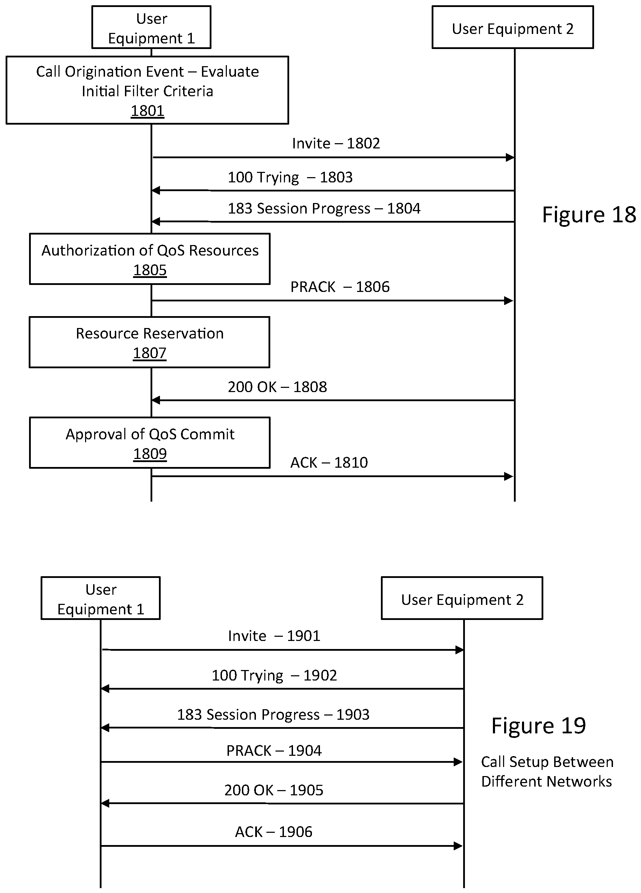

Figure 18 illustrates an exemplary call flow for a call origination between two user equipment that are configured consistent with Figures 2, 3 or 5A in accordance with exemplary embodiments of the present invention. Initially, client 1 identifies a call origination event and evaluates initial filter criteria (step 1801). User equipment 1 then sends an INVITE message to user equipment 2 (step 1802), which responds with a 100 Trying response (step 1803). User equipment 2 then sends a 183 Session Progress message (step 1804) and user equipment 1 authorizes the QoS resources (step 1805), and responds with a PRACK message to user equipment 2 (step 1806). Next, resource reservation is performed (step 1807) and user equipment 2 sends a 200 OK message (step 1808), user equipment 1 approves the commitment of the QoS (step 1809) and responds with an ACK message (step 1810).

Figure 19 illustrates an exemplary call establishment scenario between two user equipments in different networks in accordance with the present invention. Initially, user equipment 1 sends an INVITE message to user equipment 2 (step 1901), which responds with a 100 Trying response message (step 1902). User equipment 2 then sends a 183 Session Progress message (step 1903) and user equipment 1 responds with a PRACK message (step 1904). User equipment 2 then sends a 200 OK message to user equipment 1 (step 1905), which responds with an ACK message (step 1906).

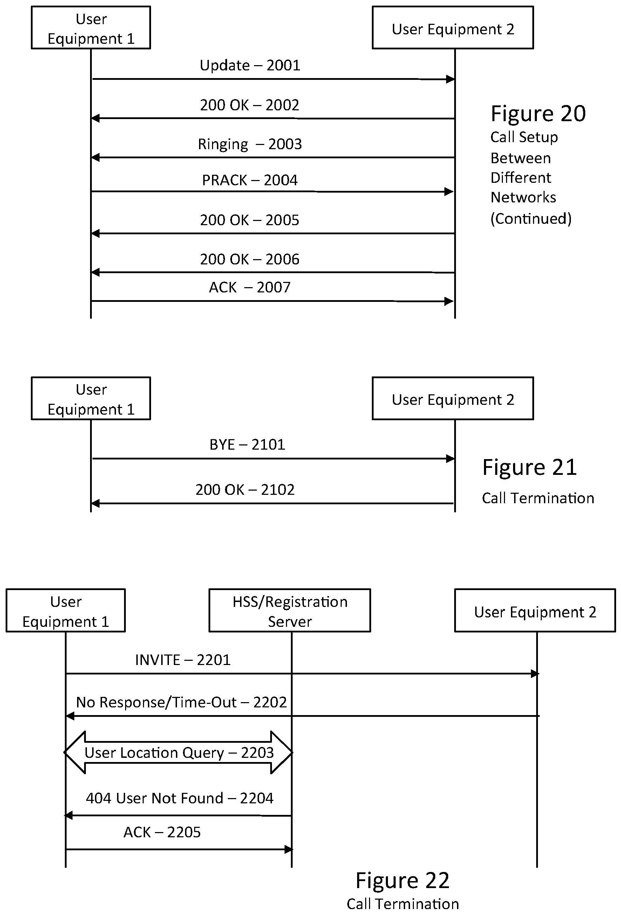

Figure 20 illustrates a continuation of the call setup between two user equipments in different networks. User equipment 1 then sends an UPDATE message to user equipment 2 (step 2001), which responds with a 200 OK message (step 2002). User equipment 2 then sends a Ringing message to user equipment 1 (step 2003), which responds with a PRACK message (step 2004). User equipment 2 then sends two 200 OK messages (steps 2005 and 2006), and user equipment 1 responds with an ACK message (step 2007).

Figure 21 illustrates an exemplary call termination in which a user equipment terminates a call. User equipment 1 sends a BYE message to user equipment 2 (step 2101), which responds with a 200 OK message, which terminates the call (step 2102).

Figure 22 illustrates a call termination scenario when a user is not found. Initially, the user equipment 1 sends an INVITE message to user equipment 2 (step 2201), which responds with a No Response/Timeout message (step 2202). User equipment 1 then performs a user location query with the HSS/registration server (step 2203), which responds with a 404 user not found message (step 2204). The user equipment 1 then sends an ACK message to the HSS/registration server (step 2205). Those skilled in the art will recognize that the double ended arrow containing text in this figure represent a number of SIP messages, which are combined in the figure for ease of understanding.

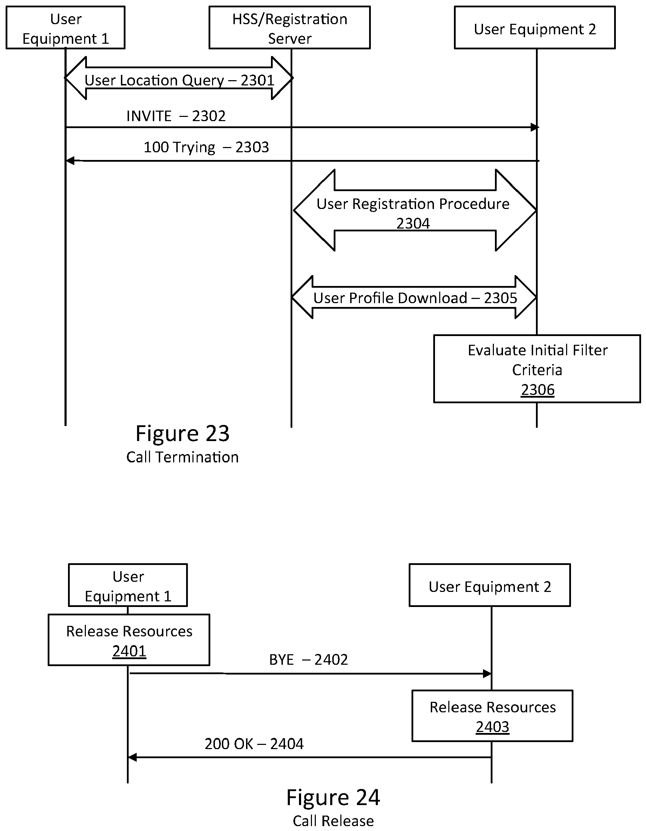

Figure 23 illustrates a call termination call flow in accordance with exemplary embodiments of the present invention. Initially, user equipment 1 performs a user location query with HSS/registration server (step 2301). User equipment 1 then sends an INVITE message to user equipment 2 (step 2302), which responds with a 100 Trying message (step 2303). User equipment 2 then performs a user registration procedure (step 2304) and a user profile download (step 2305) with HSS/registration server. User equipment 2 then evaluates the initial filter criteria (step 2306). Those skilled in the art will recognize that the double ended arrows containing text in this figure represent a number of SIP messages, which are combined in the figure for ease of understanding.

Figure 24 illustrates an exemplary call flow for a call release. User equipment 1 initially releases the resources (step 2401) and sends a BYE message to user equipment 2 (step 2402). User equipment 2 releases the resources (step 2403) and sends a 200 OK message to user equipment 1 (step 2404).

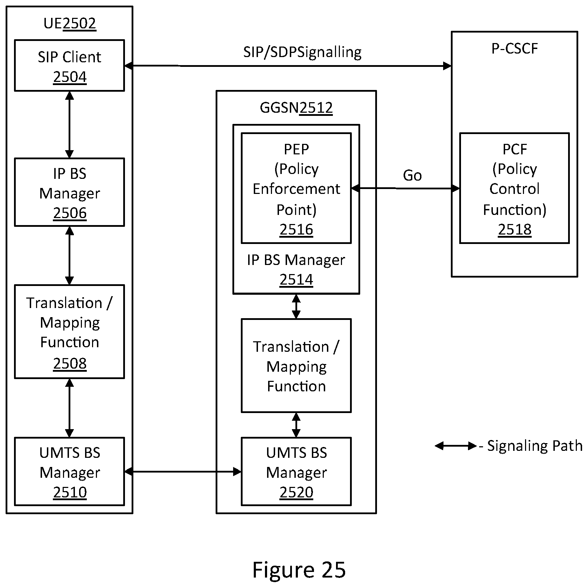

Figure 25 is a block diagram of an exemplary system in accordance with the present invention. Specifically, Figure 25 illustrates the user equipment 2502 with an IP bearer services (BS) manager 2506. IP BS manager 2506 is coupled to a SIP client 2504 and translation/mapping function 2508, which in turn is coupled to a UMTS BS manager 2510.

The IP BS manager 2506 is responsible for QoS negotiation, which provides the binding information to the GGSN 2512 to authorize the QoS and to facilitate reservation of bandwidth. IP BS manager 2506 also obtains the authorization token from the Invite message sent by the security server (not illustrated) and includes it in binding information to reserve the QoS in GGSN 2512. The IP BS manager 2506 is used to control the external IP bearer service to provide end-to-end IP QoS. It communicates with the UMTS BS manager 2510 through translation function 2508. It uses standard IP mechanisms to manage the IP bearer service. As illustrated in Figure 25, an IP BS manager may exist both in the user equipment as element 2506 and the GGSN 2512 as element 2514. IP BS manager 2506 is the service level agreement (SLA) enforcement point for service-based local SLA control. The IP BS Manager 2506 is responsible for negotiation of codecs with policy enforcement point (PEP) 2516 and obtains the SLA from a policy decision function (PDF) (not illustrated) of P-CSCF.

### Network Architecture

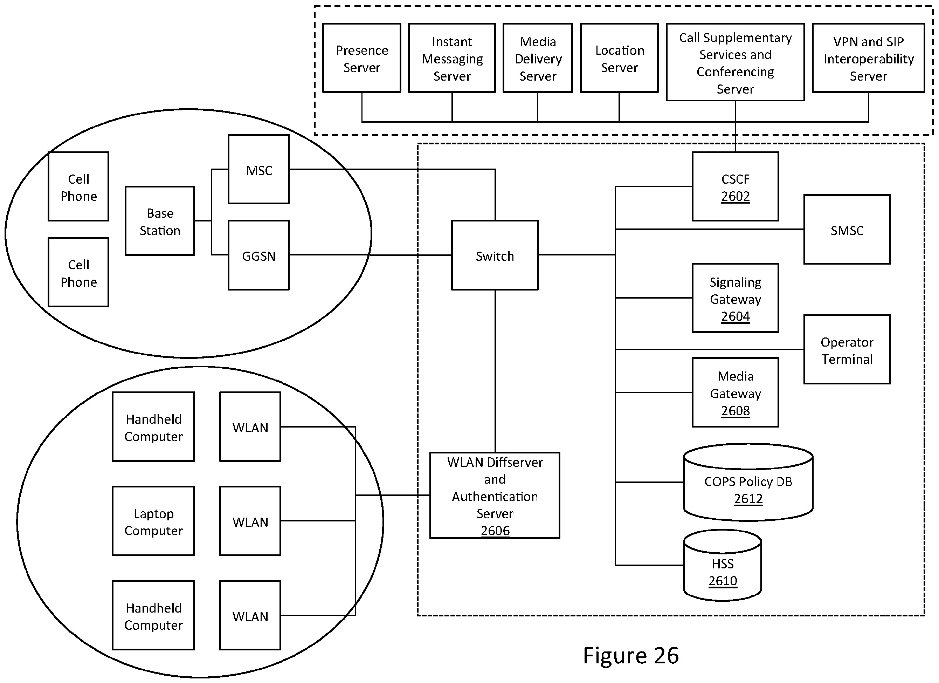

Figure 26 illustrates an exemplary network architecture in which the present invention can be deployed end-to-end with applications. In Figure 26, the network elements arranged within the upper dashed box are part of the ADEP and the network elements arranged within the lower dotted box are part of the CoSigS. The CSCF 2602 performs call processing, acts as a security server and application server (either in a single entity or distributed) and acts as a network IP server. The CSCF 2602 also includes a multi-variant IP stack to support IP streaming, IETF IP 3261, 2543, charging gateway functionality, SIMPLE/instant messenger functionality, Diameter and RADIUS functionality and media gateway control protocol (MGCP) functionality. The CSCF 2602 also includes SLA definition/control function. Furthermore, the CSCF includes Sh, cx, dx, ISC, mr, mg, go interfaces and provides SNMP and operations and maintenance (O&M) interfaces through a view used in the present invention.

The signaling gateway 2604 includes an IP - SS7-ISUP interface, IP - SS7-TUP (PSTN) interface, IP - SS7-BTUP interface and IP - SS7-Belcore (ANSI) interface. The signaling gateway 2604 also provides MGCP and trunk mediation, as well as ISDN supplementary services support.

The WLAN server 2606 is a fully interoperable with 3G and GPRS. It also includes an AAA client for WLAN, QoS-based media manager, signaling route manager, roaming and device interchange, virtual streaming client and SLA-based application resumption.

The media gateway 2608 supports multi-discipline media collaboration and codec bridging/translation. The codec translation can involve translation from one form of codec to other form between the IP and other wireline/wireless networks. This service is used when two user equipment have different sets of codecs, and the application server can ask the codecs translation application server to bridge the two codecs.

The media gateway 2608 includes Diffserv for QOS preservation, real-time protocol (RTP) and RTP control protocol (RTCP) functionality. The media gateway 2608 can perform robust header compression (ROHC) IP compression. The media gateway 2608 also supports PPP, T1/E1, CAT-5, video, voice and high speed data. The media gateway further acts as an SLA enforcement point. The signaling and media gateway provides the bridging of call setup procedures between IP and circuit switched networks like PSTN and the bridging of media formats.

The HSS 2610 supports pseudo grids IP streaming based on HSS and AAA server, as well as Diameter and LDAP. The HSS includes MAP and CAP interfaces (VLR and SCF), as well as Sh, CX, DX and application interfaces.

The PDF 2612 supports IP streaming PDF TS-29.207 (IETF COPS). The PDF 2612 also supports network policies, route optimization policies, content policies, charging policies, user policies, security policies and access polices. The other elements illustrated in Figure 26 operate in a conventional manner to support the present invention.

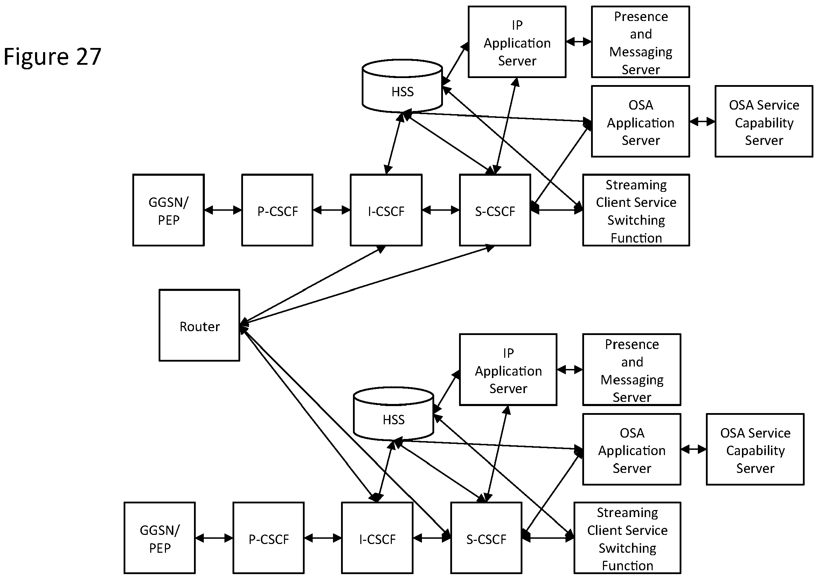

Figure 27 illustrates an exemplary deployment arrangement in which two Access network with individual IP STREAMING Core network interoperating for application sharing, roaming and load sharing. The interface between the OSA service capability server and the OSA application server is an OSA API. The interface between the P-CSCF and the I-CSCF is an Mw interface and the interface between the I-CSCF and the S-CSCF is an M interface. The interfaces between the HSS and the other network components is an ISC interface, and the interface between the streaming client service switching function and the S-CSCF is also an ISC interface. The S-CSCF can also communicate with the HSS over a Cx interface.

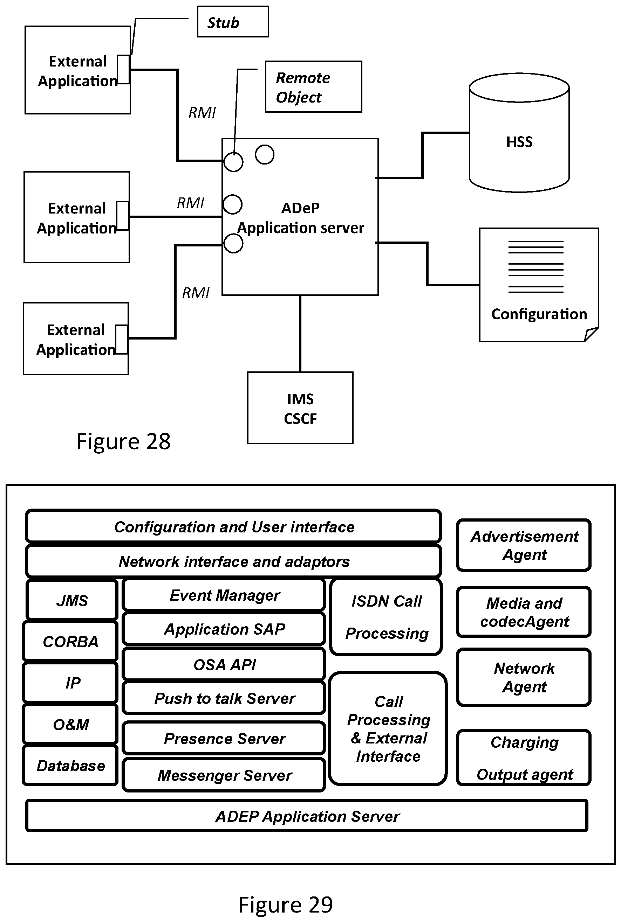

Figure 28 illustrates an exemplary arrangement that includes an Application launching and Delivery Platform (ADEP) in accordance with the present invention. The present invention is fully compliant with the IP streaming pseudo grids specification 2003 - 09 version, as well as ETSI Technical Standard 124.228 rel 2003-09. Exemplary embodiments of the present invention include an ADEP, which can be used in systems for communication, to communicate, and in communication modules of an existing or a new system. Thus, the system enables cost-effective communication without a need of a central exchange and at the same time can be controlled, operated, billed, blocked, stopped, intercepted by regulatory agencies. This aspect can be used with any type of user equipment, including telephones, mobile phones, IP phones, televisions, PCs, PC servers and/or any apparatus that can be connected to internet directly or indirectly for the purpose of communication.

The ADEP includes a mobile and server component. The mobile component provides application execution and protocol processing capability to the mobile stations. The ADEP Microcode execution environment (MiXE) for the mobile stations enables remote and download of Just Required Application Part (JRAP). ADEP MiXE can request an application to be downloaded for the mobile user and as soon as the application is processed by the user, the application gets deleted in the mobile and all data associated with the application is carried to the ADEP server for processing. This has enormous benefits because a user can have unlimited number of applications in a mobile station without storing the application in the local memory because the downloaded application is not the full application but a minimum part of application which is necessary for the mobile user, e.g., a form or an Input screen, a location data extracting program from the GPS chip, a cell ID obtaining application to extract the cell ID. In this case, as soon as the cell ID is obtained from the mobile phone the application is deleted and the cell ID is passed to the ADEP server to process it and to give further application screens or background processing screens. Thus, the JRAP allows the present invention to be implemented as a power aware, bandwidth aware and radio aware solution.

The power aware aspect of the present invention can be achieved by processing the messages, media and data in an optimized manner using single stack and non-buffered algorithm. This algorithm segregates real-time and non-real-time processing functions and processes in clock based batch routines. When a set of messages is received, instead of processing each and every message all the important parts of the message is framed in a "Compressed Processing rail frame" and processed once and later distributed. The bandwidth aware aspect of the present invention is achieved by using messages to be transmitted that support mandatory parameters transmission, SIP compression. Piggy-backed messages are supported, which can stuff more than one message in an IP packet in order to reduce acknowledgements, and reduces IP/TCP/UDP overhead of additional headers.

Figure 29 is a block diagram illustrating a variety of functions supported by the application server in accordance with the present invention. Thus, the present invention employs the ADEP server to provide a number of functionality, which will be described in more detail below. The ADEP server can be REL5/REL6 application server as defined in 3GPP TS 22. These application servers have the following application functionalities. ADEP Server connects to the CSCF through the ISC interface as per 24.228 and it accesses HSS through the SH interface. ADEP can connect to external application server and can act as the bridge between non-IP streaming and IP streaming systems.

ADEP Application Server includes an IP application server, APIs for external applications and applications on it for rolling out services for both retail consumers as well as corporate customers. A wide variety of applications can be integrated to the system.

The ADEP server uses the ISDN call processing component to support a variety of ISDN supplementary services, including call forwarding, call queuing, call waiting, call hunting, call legal interception, call-back service, call transferring, number portability, voice mail, call conferencing (with a single or multiple codecs), call forwarding to PSTN network and call diversion to PSTN network.

The ADEP server uses a presence server to support presence and availability services, including event-based, instance-based, location-based and traffic-based presence information. The present invention also supports collaborative presence and instant messaging, as well as application-based presence (e.g., shows those application you have subscribed to location services, director services, POP3 services, VoIP Services etc.)

The ADEP server uses a messenger server to support instant messaging services to exchange messages between the mobile stations or between a mobile station and a personal computer. The users can add and delete their Chat buddies from the mobile station and can use buddies to provide them the required information at regular intervals or on the click of a button. A streaming client service can be provide to allow multiparty conference, multi-lingual chat, offline messages when the user equipment is switched off, presence event-based streaming client (if the target user is not in an instant message application, the message is sent using SMS, MSN or Yahoo). A streaming client user can save the conversation and save it and mail it to a user through SMTP service.

The ADEP server can also support a storage server to enable a mobile user to optimize radio bandwidth and browse his personal computer, store streaming client chat sessions, store photographs, and access a file and mail it to another user. The mobile user can request a file to be downloaded to the user's PC through storage server enabled browser. The file will be directly downloaded to the user's PC through the PC's internet connection thus saving the mobile bandwidth. The mobile user can now browse the downloaded file on a PC and at the user's convenience can send it as a mail to another user. The storage server can host JRAP-based applications for the streaming client, which the user can access any time. This can be employed as extended storage for the user equipment.

The present invention also supports location services to provide location information on mobile user using methods such as Cell Id, Time of Arrival (TOA), Enhanced-Observed Time Difference (E-OTD), Global Positioning System etc. The location information collected in such manner can be used by any application. The location service application server, which is integrated with the present invention, can support applications such as sales force tracking, proactive mobile service (e.g., airport information starts appearing as a person reaches the airport, a parking lot is allocated for a user as the user reaches a certain location, a advertisements can be provided to the user based on location, an application can be pushed based on location), vehicle tracking (e.g., tracking speed, tracking and optimizing routes), emergency services (e.g., people in case of emergency can broadcast their location others; find the hospitals near you), and presence-based services (e.g., create SLA based on location; when you are at office you can contacted by mail only; when you are at home you can be contacted by your landline).

To support location-based services, the present invention can constantly broadcast a user location based on user and network privacy policies. The user location is collected by the network, which is then provided to the various user-subscribed applications that support location-based services, which can then provide alerts to the user, based on the application's credentials. The present invention also supports remote download of applications on a user's handset and after the application is used, the application and its associated data will be automatically erased.

The present invention also supports IP streaming VoIP services, such that VoIP calls can be provided on GPRS and 3G phones on click of a button, providing easy-to-use and effective communication tool. This service uses IP streaming as a signaling protocol to communicate to the CSCF engines. This service is provided in a manner conforming to ETSI TS 124.228.

The ADEP server also uses the push-to-talk (PTT) server to support PTT on user equipment. This is provided with a push-to-talk client in the user equipment that communicates with the push-to-talk application server. The user equipment can establish a voice connection to the application server and also accept a call from the application server. The push-to-talk client allows creation groups of contacts based on event criteria (Location, cell id or any other parameter defined by the operator and visible in the network). A user can make a call to a group created and approved by the push-to-talk provisioning engine (operator policies). The client sends an INVITE message (with Group as the id), which will be forwarded to the push-to- talk application server and thereafter to the called party.

The push-to-talk service also employs a push-to-talk server engine that receives INVITE from the calling/ broadcasting user. It extracts the "to" called party ID from the message and identifies all the users allocated to that group. In case the group is a dynamic group (users on a specific location id), the engine computes a dynamic user list from the event and instance database. After obtaining the user list, the push-to-talk engine establishes signaling and media paths. The media arriving from the calling user is multicast to all the users in the list. While making a push-to-talk call the users can be configured "listen only" or "listen and talk." In case a listening user in the group is not reachable or if the call establishment to the listening user fails, the message is stored in the server. The push-to-talk functionality can be implemented using IP. Appropriate IFCs are set for push-to-talk users to forward all messages related to the push-to-talk server. The push-to-talk server will function as a third party applications server.

The present invention also supports directory services to provide a service list of the applications and privileges that a user is eligible for and lists available applications.

The present invention further supports wireless LAN integration. This involves the integration of mobile networks with wireless LAN allows users to take advantage of best features of both networks. The application server will help the Wireless LAN network to get authenticated and also share the ADEP services. The wireless LAN and IP streaming network can seamlessly interoperate with respect to services. The application server can act as a proxy to all wireless LAN events. For example, the application server can act as a PSEUDO GRIDS AAA Proxy and it can contact the HSS where the HSS behaves as PSEUDO GRIDS AAA Server. There is no difference in HSS as the protocol between the AAA Proxy and HSS is Radius or Diameter.

The present invention supports an event/instance-based service. These are services that are invoked upon an event triggered on the user equipment. For example, pressing of the number "9" on the dial pad could invoke an application that sends an information request to the nearest cab company for a taxi. The applications may also be invoked based on an instance on the user equipment. For example, an application provides information to the user as soon as he/she enters into a particular cell in which eat outs or shopping malls are present in the vicinity.

The present invention also supports alerts as a mechanism to provide continuous push of information such as stock quotes, cricket scores, that are of use and interest to the users

The present invention provides an SMS streaming client interoperability server, which allows a two-way transaction between a streaming client and SMS server. A user can use a streaming client to send a message to the streaming client user and vice-versa.

The present invention also supports a streaming client and third-party messenger service. With the streaming client provided by the ADEP server, a user can start chatting with Jabber-based streaming clients and presence servers, MSN, YAHOO, ICQ, streaming client server and have seamless connectivity.

### Protocol Stack

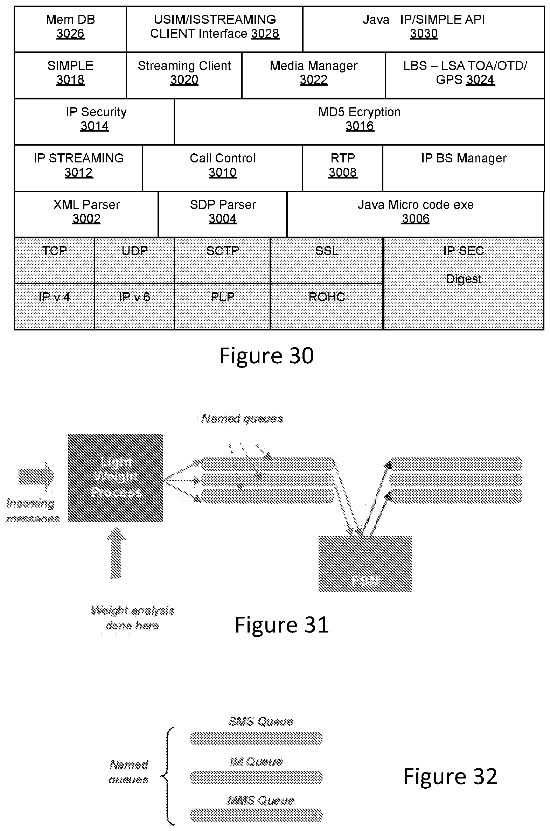

Figure 30 is a block diagram illustrating the protocol stack of the present invention. The various components can be implemented in Java and C++. The transmission control protocol (TCP), user datagram protocol (UDP), stream control transmission protocol (SCTP), secure sockets layer (SSL), IPv4, IPv6, packet layer protocol (PLP), robust header compression (ROHC) and IP security (SEC) digest elements are conventional elements and those skilled in the art would understand the operation of these elements.

The XML Parser 3002 parses the XML messages that accompany IP messages, such as Notify messages. The XML parser 3002 can be implemented as an API in Java or an IP Simple API where a user defined application can be used. The XML parser can parse XML contents and create new XML messages.

The session description protocol (SDP) parser 3004 parses the SDP parameters, which are used for understanding the user equipment capabilities, and subsequently negotiates for call establishment based on these capabilities. The SDP parser receives SDP parameters and passes them to the IP streaming SDP engine, which in turn works on IP streaming call control and negotiation. The SDP parser API's are available in Java and C based on IP SIMPLE API for the usage third party application. Additionally, the SDP Parser uses a cache in the MemDB where new SDP parameters can be added.

The Java Microcode execution (JME) component 3006 executes IP applets, java-based applets and can support over the air configuration, over the application configuration. The ADEP server can push an application on-demand, and the application can be deleted after or as per the application SLA. The user of the user equipment can invoke and close applications on-demand. The JME component 3006 can provide user access to any number of applications independent of memory, processing power, algorithms, codecs and at the same time will manage data produced out of these applications. The JME component 3006 also provides application continuity in case the application loses its connection, the battery drains and due to a change of mobile station. In these cases, when the user restarts the application the application will resume from that part where the user left.

The JME component 3006 also provides JRAP. One JME-JRAP example can be IP compression in which the JME component 3006 requests an IP compression JRAP of a compressed IP message. The IP compression program can be obtained from the ADEP sever and the message would be uncompressed. The obtained IP compression program can remain in the mobile station as the user will use it frequently or the operator can provision the life duration of any such programs. All of these features strictly follow IP protocols. The use of IP compression reduces complex call setup delay and reduces bandwidth stealing caused by in-call signaling. The pseudo grids defined compression endpoints are the user equipment and the first IP-Proxy - Proxy CSCF (P-CSCF). The IP compression module has two internal module identifiers, one for the decompressor and the second for the compressor. The identifier would first see if the message is IP compressed or not. If it is not compressed, it will pass directly to IP Kernel. Otherwise, it will uncompress it. The IP kernel uses the IP compression API if the message it transmits needs to be compressed.

The Real time Transport Protocol (RTP) component 3008 provides end-to-end network transport functions suitable for applications transmitting real-time data, such as audio, video or simulation data, over multicast or unicast network services. The RTP module 3008 is compliant with RFC 1889. This module provides support for AMR, G.711, G.721 and G.723 codecs. A fixed play-out scheme is also present, although no sender-receiver loss concealment technique is deployed. The RTP stack has the RTP state engine with API, speech codecs (these can be implemented in C), multi-stream threading, timer implementation and FIFO queue implementation.

The call control module 3010 is responsible for operating the IP protocol stack and analyzing the SDP. The call control module 3010 implements all the basic supplementary services for IP-based calls. The call control module 3010 is responsible for using the IP protocol stack and makes decisions based on the SDP parameters. The call control module 3010 provides functions for codec negotiation, QoS negotiation, media negotiation, call forwarding, call information display, and multiple call establishments. The call control module 3010 provides an API to control the call functions by third party applications. The call control module 3010 uses the APIs to control the IP streaming module 3012. The present invention can employ any of the well-known call control APIs using a Java SIMPLE API.

The IP streaming module 3012 is a state machine controlled by the call control module 3010. The IP streaming module 3012 is based on the pseudo grids TS 24.228 Specification (2003 03). The present invention employs session initiation protocol (SIP), an application-layer control (signaling) protocol, to create, modify, and terminate sessions with one or more participants. These sessions include Internet telephone calls, multimedia distribution, and multimedia conferences. IP invitations are used to create sessions carrying session descriptions that allow participants to agree on a set of compatible media types. IP makes use of proxy servers to help route requests to the user's current location, authenticate and authorize users for services, implement provider call-routing policies, and provide features to users. IP also provides a registration function that allows users to upload their current locations for use by proxy servers. The IP streaming module 3012 supports user identities storage and binding, mobile origination with service-based local SLA, mobile termination with service-based local SLA, mobile-to-mobile session establishment, Subscribe and Notify procedures, Message, QoS authorization, mobile-originated sessions requesting the establishment of QoS preconditions and coordination, registration signaling, mobile initiated de-registration, user equipment subscription for the registration state event package, registration error conditions, re-registration, preventing a non-registered or unknown user from roaming, registration and user authentication failures, Invite-based Signaling flows for session initiation, mobile origination, mobile roaming, mobile termination located in home network, mobile-to-mobile session hold and resume procedure, mobile-initiated hold and resume of a mobile-PSTN session, registration signaling, and user equipment subscription for the registration state event package.

The IP Security module 3014 provides IP security for IP-based transactions, which include usage of TCP-based SSL and IPSec. The IP security module 3014 privately maintains a public key for encryption.

The MD5 encryption module 3016 provides various Digest algorithms based on Base 64, including the MD5 Digest algorithm. Apart from normal authorization schemes, functions for EAP and CHAP are available.

The SIMPLE protocol module 3018 provides for presence management using a presence client that inter-operates with the SIMPLE Presence and Availability server. It will be recognized that SIMPLE is based on IP. In accordance with exemplary embodiments of the present invention, the SIMPLE module 3018 is implemented consistent with IETF SIMPLE, pseudo grids Presence Stage 1 specification: TS 22.141 and pseudo grids Presence Stage 2 specification: TS 23.141. The SIMPLE protocol supports a number of functions, including publishing, subscription and notification, presence document, authorization and watcher information.

The radio interface of the present invention controls the user equipment so as to minimize the number/size of messages over the air, and limit the memory, power consumption and processing power. The radio interface supports publishing from multiple PUAs, merges information and resolves conflicts, and keeps all the PUAs aware of each other's publishing. The radio interface is also arranged so that full state updates within each publish transaction are not necessarily needed, but instead updates of only the information that has changed.

The present invention also supports filtering so that the subscriber can provide rules for the information to be received. The filtering also allows constructing presence information based on filtering request and authorization rules.

Efficiency is obtained by using, among other things, partial notification (so that a notification contains only the information that has changed status) and by a dynamic compression mechanism. Content indirection can be provided in which the subscriber can indicate whether the user equipment supports content indirection and the PA performs CI, if required, taking into account subscriber's preferences

The present invention also supports anonymous subscription so that the subscriber's ID is not revealed to the presence entity. Additionally, multiple types of presence attributes are supported so that the type of the presence attribute can be user-specific, device-specific or network-specific, and so that there is a unique identity for all attributes. The present invention also supports multiple instances so that the same attribute is shown for different subscribers with different values.

The streaming client module 3020 supports pseudo grids and pseudo grids 2. The streaming client uses IP-based SIMPLE Protocol and performs text-based instant messaging. The streaming client module 3020 also supports sharing media files, mobile-to-mobile data and/or file sharing, conferencing, multiple streaming client sessions, and voice conferencing where the streaming client initiates an IP Invite procedure in case of a voice/video chat or conference.

The media manager module 3022 is responsible for starting media for the session based on IP streaming instructions. The media manager module 3022 advertises the codec, frame size and file format it supports for playing and transmitting. The media manager module 3022 interfaces with the media hardware to play and record media. The media manager module 3022 interoperates with the IP and call control modules for its functionality. The media manager module also provides API for third party applications.

LBS-LSA TOA/OTD/GPS module 3024 supports location information using a standardized mechanism to express location information and related privacy restrictions. The APIs can be provided by SIMPLE or in Java IP SIMPLE API, which are well-known in the art and will not be described in detail here.

LBS-TOA-OTD-AGPS module 3024 provides a number of location-based functions. LBS is a location-based services interface that interoperates with SIMPLE for notification of presence information. The SIMPLE protocol decides whether the Location has to be advertised. LBS can implement a variety of location determination techniques, such as time of arrival (TOA), observed time difference (OTD) and assisted global positioning satellite (AGPS). The LBS obtains its co-ordinates from the location and positioning hardware/vendor software. With respect to TOA and OTD, it behaves like a serving mobile location center (SMLC) client. LBS uses vendor-specific hardware for the purpose.

The MemDB module 3026 is a memory database based on the system memory, flash or inbuilt RAM in the mobile equipment. The MemDB module 3026 can be accessed by any application through its API to create tables, add records, delete records, index records, create primary key, create record set, and create a snap shot. MemDB API's are similar to SQL structure inside a MemDB function making it easy for users to access database. The capacity of the MemDB module 3026 is directly proportional to the memory space allocated by the vendor. The data stored in the MemDB module 3026 will be stored permanently. The MemDB module 3026 can also compact the table and compress the records when the records are not in use. The performance of the MemDB module 3026 is based on the processor/controller usage.

The USIM/ISSTREAMING client interface module 3028 is implemented consistent with pseudo grids TS 33.203 IP streaming specification. The ISSTREAMING client interface module 3028 stores IP streaming-based ISSTREAMING CLIENT application, algorithms and data. When an ISSTREAMING CLIENT is not available, a USSTREAMING CLIENT will be used to store ISSTREAMING CLIENT application, algorithms and data. UMTS AKA is used for the authentication. A challenge response protocol and the AUC are used when the application server challenges the user equipment after a registration. A quintet containing the challenge is sent from the application server to the serving network. The quintet contains the expected response XRES and also a message authentication code MAC. The user equipment calculates MAC, XMAC, and compares this with the received MAC and if they match the user equipment has authenticated the application server. The AKA-protocol is a secure protocol developed for UMTS and the same concept/principles will be reused for the IP multimedia core network subsystem, where it is called IP streaming AKA.

The ISSTREAMING CLIENT includes the instant messenger private user identity (IMPI), at least one instant messenger public user identity (IMPU), the home network domain name, support for sequence number checking in the context of the IP STREAMING Domain. The ISSTREAMING CLIENT also includes the same framework for algorithms as specified for the USSTREAMING CLIENT applies for the IP multimedia services identity module (ISIM). The ISSTREAMING CLIENT includes an authentication key and the ISSTREAMING CLIENT can provide the CK to the user equipment. Additionally, SAS in the user equipment can be deleted when the user equipment is switched off. Session information is stored in the MEMDB module 3026 as part of configuration data to be used while registration. This application uses the ISIM/USSTREAMING CLIENT interface driver to access the ISSTREAMING CLIENT Application. ISSTREAMING CLIENT applications are available separately with this module, which can be loaded into the ISIM/USIM.

The Java IP/SIMPLE API 3030 provides an API to access all the modules described. These APIs are used internally by various modules and also provided for external access. A profile is stored in the mobile, called API ALLOW.RCD. This file can be used by the Vendor to specify those APIs, which can be accessed by the third party. Those APIs, which are not mentioned in this file, will not be allowed by the third-party to access.

### Message Queuing

The radio aware aspect of the present invention is achieved so that the processing is performed based on priority of messages, so that if the radio connection is lost, the radio aware module will stop the transmission functions and start working on those processing blocks that need not be transmitted. This optimizes the processing and saves a lot of time and reduces thread correction. The Drop and Insert in Weighted and Shunted Queued Architecture (DIWSQA), which is discussed in detail below, ensures optimized bandwidth usage, radio usage and limits power usage. The next section will describe the architecture and the protocol stacks used in the ADEP mobile part.

The DIWSQA provides supports a weight analysis that calculates the load already handled by queues and also determines if and when a queue is capable of accepting incoming messages to be processed. The queue manager performing weight analysis will also decide whether a message should be marked for dropping. As illustrated in Figure 31, the queued architecture involves all the incoming messages are pumped into custom named queues, after a thorough weight analysis for concurrent lightweight processing. The named queues can be arranged, for example, based on message type (i.e., SMS, IM and MMS), as illustrated in Figure 32. It should be recognized that the queues can also be arranged based on other criteria, such as message priority.

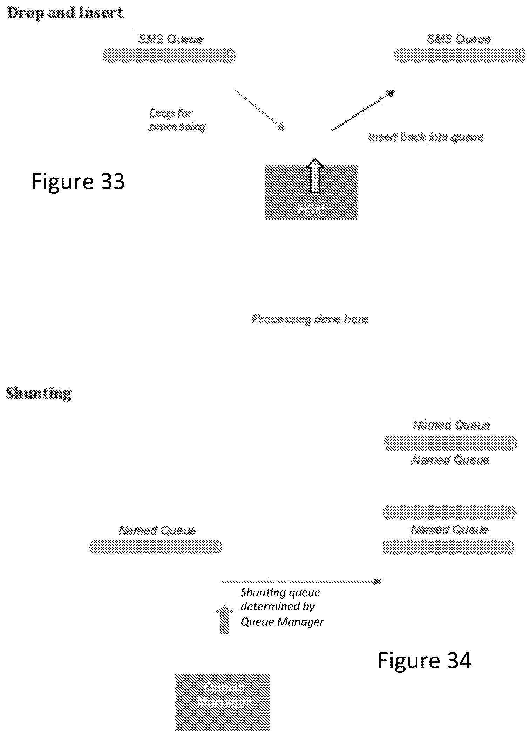

The processing of the message queues can be using a drop and insert technique or a shunting technique. Figures 33 illustrates the drop and insert technique in which the messages are dropped from the named queues into the finite state machine (FSM) for further processing and then inserted back into queues. Figure 34 illustrates the shunting technique in which the messages from one named queue can be shifted to another named queue without any treatment by a protocol stack or finite state machine. Shunting is performed to bypass a process or to treat a high priority message by inserting the message in a high priority queue and/or to avoid race conditions.

Exemplary embodiments of the present invention provide three different techniques for processing the queues. The first technique is enforced priority scheduling in which every queue is assigned a priority and the queue will be processed for a fixed time regardless of its load. If a queue has no data, then the process waits for a fixed time. The second technique is weighted priority scheduling, which is similar to enforced priority scheduling except that a queue will be processed only if the queue is not empty. The third technique is weighted fair priority scheduling in which the ratio of processing time between queues will be varied automatically depending upon the load on each queue.

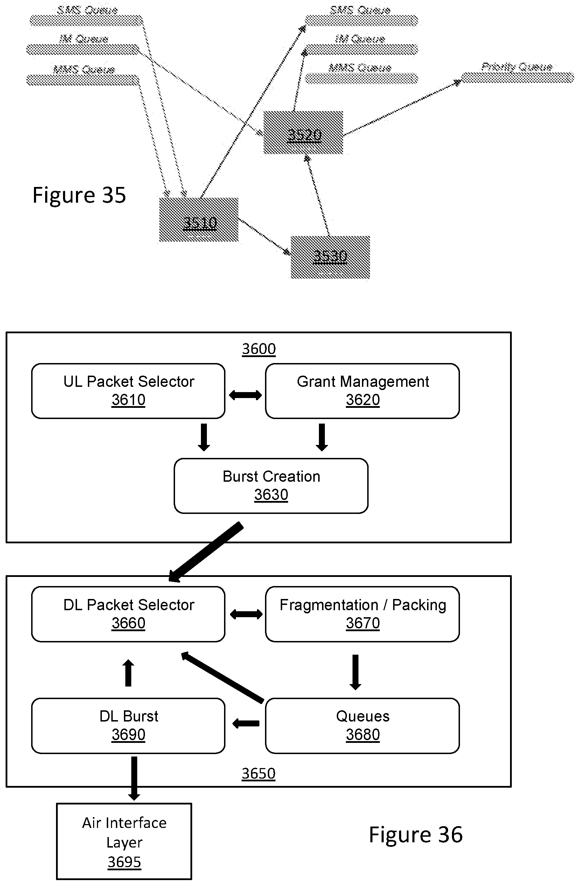

Figure 35 illustrates the overall processing of queued messages in accordance with exemplary embodiments of the present invention. Specifically, this figure illustrates a combination of the drop and insert technique illustrated in Figure 33 and the shunting technique of Figure 34. Accordingly, as illustrated in Figure 35, all messages waiting in queue may be dropped for processing by one of the finite state machines 3510, 3520, or 3530 and different named queues may take different routes, thus performing concurrent lightweight processing. This consumes as little time as possible. Messages in a high priority queue preempt messages in the low priority queues. Every finite state machine 3910, 3920, 3930, after processing a message, decides the next drop or shunt for that message and marks the message accordingly. The finite state machine can decide on which named queue a message should be inserted into.

Exemplary embodiments of the present invention can employ one of two types of finite state machines, a mono-process finite state machine or a multi-process finite state machine. The mono-process finite state machine processes only one message at time and other messages wait until the previous message is completely processed. The multi-process finite state machine spawns a thread for every new message in the queue and the number of threads is limited by the system in the state configuration table. The finite state machine maintains the state for a flow of protocol messages by associating a message with a flow ID and marking its previous state and variables in the state configuration table. The state configuration table is implemented as a finite state machine bucket.

### Packet Scheduling

The device scheduler includes modules for packet selection and burst formation. The device scheduler also includes an uplink (UL) and downlink (DL) scheduler. The downlink scheduler can manage connection IDs (CIDs) of incoming packets by using a line design interface to time stamp the packets. Thus, for example, for IP packets, the IP address can be used to look-up an associated CID. It will be recognized that multiple IP addresses can map onto one CID.

Packet selection begins by traversing the array from a zero position (the dead line of the frame currently being allotted). This array points to a first element of vectors representing a CID for which the first packet in the queue has the current dead line. The packet is allocated when the queue is below the minimum rate, which is determined by the traffic shaping module (described in detail below). If the queue is above the minimum rate, the scheduling is shifted to the next element after posting a mail box. Otherwise, the next packet is analyzed and allocated if the packet is identical. If the next packet is not identical, the element is removed from this vector and inserted in the appropriate vectors down the array. The allocation of the first packet in the next element is performed in the similar way and this process continues until no elements exist in the current array position.

There are two ways of selecting the next array element, which can be employed separately or combined. In the first way, the packet selection algorithm continues to the next array element pointing to the next vectors of elements for which the first packet in each queue has a dead line. The packets are allocated and the process continues until the end of the array. If the frame is full before the array ends, then the packets with earliest scheduling time have been allocated. In the second way, the packet selection algorithm can go to the next array element and allocation is only performed queues with the appropriate minimum cell rate (MCR). Although the second way of selection has a higher risk of packets being dropped when large burst arrives with same scheduling times, it does achieve higher overall system bandwidth by making use of radio characteristics.

Exemplary embodiments of the present invention can also employ vector-based forwarding and scheduling. This involves creating a vector for a scheduling queue and within the list the non-real-time service and best effort (BE) connections are ordered by their QoS priority level parameters. For the unsolicited grant service (UGS) allocation is performed using a calendar scheduling method.

The traversing begins at the primary element and goes down the linked list. A traffic shaping module algorithm is used at each element and packets are selected according to the optimal protocol data unit (PDU) size. As the rate is reached, the current element is mail boxed as inactive and the process proceeds to next element. The mail box is reset for every new frame. As the sub-frame becomes full when the packet selection is stopped, a reference maintains the last allocated element for non-real-time service and best effort. In the next frame the vectors will be traversed again for the real-time service connection. At each priority level, the algorithm checks for the reference location when reaching the non-real-time service and best effort connections. The algorithm jumps to the reference location if the reference is set for a connection within the priority level. Otherwise, the level will be moved one-by-one, which provides fair treatment to the lower level connections without creating a priority inversion.

Exemplary embodiments of the present invention involve traffic shaping to manage incoming traffic by performing an initial policing of packets is performed for all the packets with associated CIDs. An average throughput rate QoS parameter is associated for each CID. A traffic shaping module queues the packets if the traffic rate of the service is below the average throughput rate. All the packets for connection that exceed the average throughput rate are discarded. As per the defined traffic throughput and the average throughput time, every packet that is queued causes an update in the time which specifies the previous traffic policing and the current traffic that has to be scheduled.

Figure 36 is a block diagram illustrating the uplink (UL) scheduler 3600 and downlink (DL) scheduler 3650 in accordance with exemplary embodiments of the present invention. Initially, the UL scheduler 3610 starts as the UL-MAP generated by the UL scheduler, which must be mapped to the DL sub-frame. It will be recognized that the UL-MAP is the medium access control (MAC) management message indicating the contents of the uplink sub-frame. When the UL sub-frame is fully allocated, the DL scheduler 3650 can be run.

Turning first to the UL packet scheduler 3600, during the connection negotiation and setup, an element is created containing all QoS parameters relevant to the connection and other parameters. Two instances of this element are created for real-time service connections, one with a mail box for connection reaching defined traffic throughput traffic rate and one with a mail box for connection reaching average throughput traffic rate. For UGS elements, a first instance of real-time service elements is inserted to represent a calendar of scheduling times in an array. Elements of non-real-time service, best efforts and a second instance of real-time service are inserted in large vectors ordered first with real-time service elements, second with non-real-time service elements and third with best efforts elements. The bandwidth allocation algorithm then processes the array representing the scheduling time calendar for the allocation of defined traffic throughput rate to UGS and real-time service connections. The bandwidth allocation algorithm then processes second vectors for allocation up to a maximum rate for all connections. As the defined traffic throughput rate is equal to the maximum reserved rate no need arise for the second UGS element because additional timeslots cannot be allocated. The management layer determines the ranging channel size and feed to the UL scheduler as input.

Exemplary embodiments of the present invention employ first-in-first-out (FIFO) scheduling. Specifically, every element in a queue represents a scheduling time date in the number of frames from the current frame and each element has a representation to a vector of elements for which the first packet in the queue has a scheduling time. The calculation of the scheduling time is performed based on the time stamp at the applied by the line design interface and the maximum jitter QoS parameter. For FIFO scheduling, the real-time service connections parameters include defined traffic throughput rate, average throughput rate, maximum latency and maximum jitter.

UL packet selector 3610 places incoming bandwidth requests at a position in the array using the calendar array. Grant management module 3620 allows grant scheduling until this scheduling time and should not occur after this. If the scheduling time misses for the first time, the grant is rescheduled to position. If the second scheduling time misses, the grant is discarded. Alternatively, fixed grant scheduling can be employed in which the UGS connection parameters include defined traffic throughput rate, maximum latency and maximum jitter. Bandwidth grants are placed in specific intervals as specified by the user group identifier (UGI) using a calendar array. Grants are scheduled when an interval comes within the maximum jitter distance of the current frame. A higher grant is temporarily provided when the slip indicator bit is set.

For non-real-time service, remaining real-time polling service (rtPS) and best effort service, the bandwidth allocation algorithm goes to the linked lists representing each connection type after granting UGS and real-time service requests up to minimum rate. The non-real-time service and best efforts connections are ordered by priority level. After the bandwidth is granted by the bandwidth allocation algorithm, information about the grant is sent to bandwidth grant store.

The UL scheduler 3600 supports interface-to-frame mapping by using a two-dimensional array the input parameters - burst sizes and service set identifiers (SSIDs) are passed to the frame mapping. The UL MAP is generated by the frame mapping as a PDU, and the reference and length is returned to the DL scheduler.

The traffic shaping module update involves the user equipment receiving a minimal amount of excess grant because of grid granularity and it is not counted when updating the traffic shaping module. The traffic shaping module is updated during the traffic shaping traffic shaping module and not in the policing stage traffic shaping module.

Grant management module 3620 manages grants by forming bandwidth grants grouped in queues on a per user equipment basis by the bandwidth grant store. The queues of multiple individual grants per user equipment forms the basis for burst creation module 3630 to map each burst in to the UL sub-frame for a particular user equipment in the frame mapping algorithm. Also the bandwidth grant store computes the current frame allocation.

Device sub-frame allocation uses a counter representing the sub-frame area. The amount of data (bytes) is counted on every granting of bandwidth request. This is converted into an area of UL sub-frame for a particular user equipment according to the modulation/coding type for the user equipment. The frame mapping begins once the counter reaches full.

Burst creation module 3630 handles bursts as follows. Groups of bandwidth grants are taken from the burst queues made at the bandwidth grant store and a determination is performed of where to place the burst in the two dimensional frame for the particular user equipment. Generation of the information for the UL MAP. A PDU that includes the information for the UL MAP is generated and passed to DL scheduler 3650. Frame coordinates are used so that the burst sizes are known and the area occupied in slots on the frame can be computed. Hence, the burst dimensions are known in slots and bytes.

The UL scheduler 3600 performs UL allocation by mapping from top left corner sequentially, across the end of the row and further from the next row down. An SDU PDU interface (not illustrated) is provided to pass the UL MAP as a PDU to the DL scheduler 3650.

The DL scheduler 3650 includes a DL packet selection module 3660 that selects the packets to be transmitted. The information regarding the selected packets is transmitted to the fragmentation and packing module 3670. The DL packet selection module 3660 operates in a similar manner to the UL packet selection module 3610. The fragmentation and packing module 3670 creates the output PDU and computes overhead elements, such as headers, sub headers, CRC, encryption and burst overhead. The fragmentation and packing module 3670 then sends the CID reference/length of the created PDU to a PDU store, such as queuing module 3680. Queuing module 3680 groups the PDU to bursts and computes the cumulative burst sizes and the current frame area used.

The DL burst module 3690 operates such that when the threshold is exceeded, the accumulated PDUs are mapped by the DL frame mapping. The DL burst module 3690 identifies the largest free rectangular space remaining in the frame and passes this information to the DL packet section module 3660, which then selects non-real-time packets to fill the identified space. This process continues until the allocation is completed. Upon completion, the DL frame mapping passes a PDU reference/length database and burst coordinate to the air interface layer 3695.

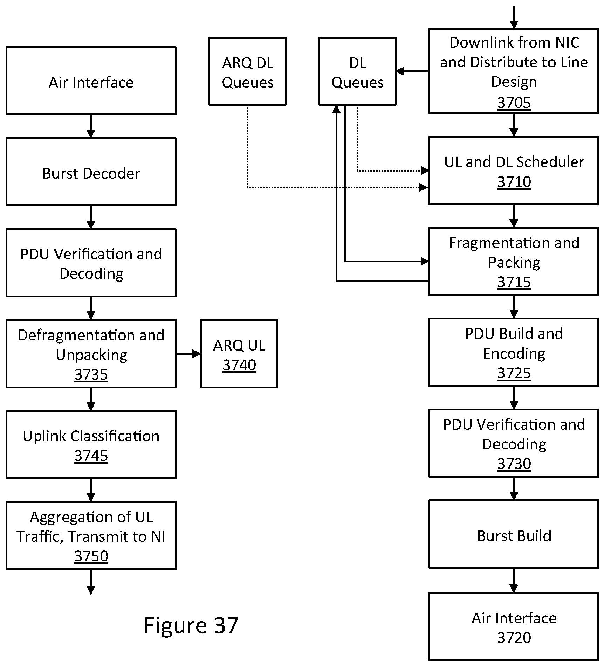

The scheduler will now be described in more detail in connection with Figure 37. Downlink packets are received from the network interface card (NIC) and distributed to the line design 3705, which provides the packets to the DL and UL scheduler 3710. The scheduler 3710 receives the packets from the convergence sub-(CS-) layer where each and every queue represents a CID. The scheduler 3710 takes inputs such as queue parameters and length, subscriber station (i.e., the user equipment) information and traffic shaping policy in order to schedule the packets. The Ethernet connection or a PCI based Ethernet connection layer parameters can be accessed independent of the RF DATA-CPS (common part sublayer) implementation of the present invention.

The scheduler 3710 determines the size of the burst inside the device frame and the location of the burst such as slot offset, sub channel offset, number of slots and number of sub channels. The number of bytes that can be transmitted in a burst can be determined based on the modulation type. Every CID has associated service flow id information. Fragmentation and packing module 3715 performs fragmentation if the number of bytes required to fit a frame is less than the actual bytes. Also, the location of the data is not to be used by the scheduler any more but the same has to be transparently forwarded to the air interface layer. The scheduler 3710 can decide the packing rate and fragmentation rate depending upon the available air interface symbols, received signal strength indication (RSSI) and carrier-to-interference noise ratio (CINR).

The processing of downlink packets received from the network interface by element 3705 will now be described. Element 3705 performs a classification of IP destination port/address to device CID is performed on the packets coming from the NIC, which offloads this from the line design processor. Each and every flow is associated with a separate CID queue and for each and every CID queue the service flow association decides the rate at which the packets are modulated and coded. Data arriving from the network interface is classified based on 5-tuples, and additional fields can also be provided for classification. After classification separate queues are provided for each CID. The packets are received in the buffer, where the buffer represents circular queues for each CID. The first two parameters - SDU buffer start reference and SDU buffer length are combined by storing a reference to the end of the SDU buffer in the queue. Service flow parameters and time stamps are used for the scheduler input parameters such as CID QoS parameters. A per queue status array has both the number of packets in the queue and number of bytes in the queue.

Fragmentation and packing module 3715 will now be described in more detail. The scheduler 3710 passes the location and size of the burst to the air interface 3720, and the air interface uses the location and size of the burst to build the actual burst to be transmitted. If the scheduler 3710 is responsible for determining the PDU parameters, such as size and source CID, then the target CID is provided as input information to the fragmentation/packing module 3715. Alternatively if the burst information is passed to the fragmentation/packing module 3715, then a simple priority-based scheme can be used to select the CID within a group of CIDs. The parameters like ARQ block size and ARQ enabled yes/no are assumed to be given in per CID/user equipment context.

The fragmentation/packing module 3715 determines the size of the PDU within a burst. The PDU buffer, where the PDU to be assembled, is created from the SDU queue. In order to keep the performance high and improve system throughput, only references need to be passed to data instead of building the complete PDU in the memory. The PDUs are created without having another copy of the SDU, by instead using the reference based on a data structure that points the original copy. The rest of the PDU building process is independent of the issue of handling the ARQ traffic. A packing sub-header is generated if the SDU is smaller than the desired PDU size. A fragmentation sub-header is inserted if the SDU is bigger than the PDU. In order for the code to check for the data to be inserted in PDU, a reference and length field of the fragment is added to the PDU build array. The process is performed until all PDU spaces are filled. For all added fragments, the ARQ storage array is updated. The output of the fragmentation/packing module 3715 is provided to the PDU builder module 3725, which builds the actual PDU from the set of references including the encryption.

The ARQ process involve ARQ DL queues detecting timeouts on transmitted fragments and also handles ARQ feedback information from incoming acknowledgements. A fragment descriptor is generated for each fragment that is generated and added to PDU array build. The fragment function can be:

### Fragment (CID, * Fragment, Size of (&Fragment))

This assumes that ARQ timeout value is set to the same value for all CIDs serviced in the system. This can be modified to accommodate multiple timeouts of ARQ.

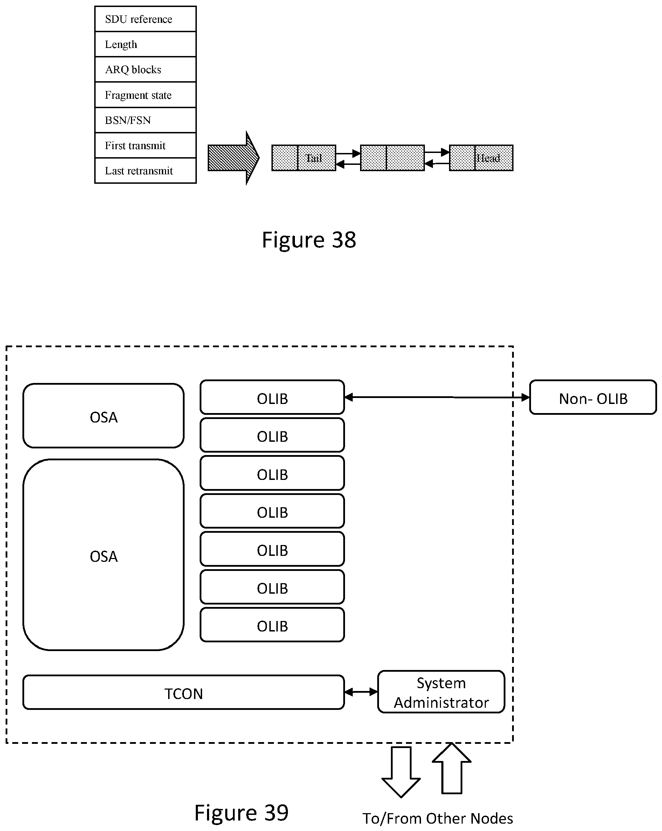

As illustrated in Figure 38, the fragment descriptor is added to the tail of one ARQ double linked list shared among all CIDs after initial transmission and moved back to the tail of the linked list after the retransmission. The linked list head in checked by the ARQ block at regular time interval. If the last time transmitted parameter of the head of the linked list is timed-out, the fragment is again retransmitted and added to the tail of the linked list. Once all the blocks in a fragment are acknowledged, it can be removed from the linked list.

A reference to the fragment descriptor is stored in an array in which each entry corresponds to a backward sequence number (BSN) for this particular CID for every block sequence number. The BSN can be referenced on receipt of positive acknowledgement. In order to ensure the number of unacknowledged blocks in descriptor is accurate, the ARQ block variable should be lowered. When the number of unacknowledged ARQs becomes zero, the complete fragment is acknowledged, which means that it can be deleted from the double linked list.

A similar method is used for referencing the buffer in which the SDU is stored on entering the RF DATA CPS layer of the present invention. The buffer allocation code uses a buffer reference counter, which is set to 1 when a SDU arrives, and is incremented by 1 for every generated fragment. The reference counter is decremented by 1 as the SDU gets fully fragmented. The ARQ mechanism knows the acknowledgement of the complete fragment. The fragment descriptor is removed from the double linked list and the reference count of the SDU buffer is decreased by 1. The reference counter reaches 0 when all the fragments generated by the SDU are acknowledged, and hence buffer can be de-allocated.

Returning again to Figure 37, the PDU building and encoding module 3725 will now be described. The main task of this module is to build the PDU from the array of source reference and length fields obtained as input from the fragmentation/packing module 3715. Module 3725 also adds a header check sequence (HCS), cyclic redundancy check sequence (CRC) and encryption to the PDU, which results in the module outputting a fully formatted PDU. Thus, the output from the module 3725 is a reference and length indicator to a buffer containing the fully formatted and encrypted PDU.

When a burst arrives at PDU verification and decoding module 3730 from module 3725, the burst is subject to a burst decoding to obtain the PDU from the burst. The PDUs are subjected to defragmentation and unpacking based on the information present in the RF DATA sub-header of the present invention, and the SDU is obtained and sent to upper layers for uplink classification.

The processing of uplink packets will now be described in connection with the modules on the left-hand side of Figure 37. The defragmentation/unpacking module 3735 disassembles the PDU into sub-headers and fragments the PDU to build SDUs. All the sub-headers are extracted to the management entity. The sequence number and length is determined, depending upon the sub-header type, for every fragment. The sub-header type can be ARQ enabled or disabled by fragmentation and packing module 3715. Based on the sequence number of the received payload, it is determined whether the PDU is in-sequence or out-of-sequence.

If it is determined to be in-sequence, then the validity of the buffer allocation scheme for the received fragment is checked. The header with first fragment without a buffer is allocated a fixed buffer of 8 KB. On receipt of the continuing fragment, the new fragment is added to the data stored in the allotted buffer. A combined reference towards the end of the data is allocated in a fixed 8 KB buffer. The filled SDU buffer is sent to NIC or to the management layer when the last fragment is received.

If it is determined to be out-of-sequence, the incoming fragments of non-ARQ enabled connections are processed depending upon the fragment type field. Out-of-sequence fragments for ARQ-enabled connections are first checked to determine whether the sequence number is within the ARQ window. If it is outside of the ARQ window, it is discarded. Otherwise, the fragment is placed in the ARQ array.

The uplink ARQ module 3740 uses a fragment description array in which each entry represents a single BSN. The fragment descriptor has: (1) a reference to the start of the block inside the received PDU; (2) starting or ending indication in the fragment; (3) the length of the block, in case the block ends a fragment; and (4) the timer value when the block was received. All the ARQ-enabled connection-based out-of-bound sequence fragments are received and stored in the ARQ array. An entry is made in the array for every BSN with a reference to start of the block and a timestamp. An indicator byte indicates the start or end of the new SDU. A data reference value is set to null for blocks that are not received. If the ARQ block enters the uplink process that had been obtained correctly before, the old block is removed and the new block is entered into the array.

Upon reception of an in-sequence fragment, the UL defragmentation and unpacking module 3735 checks the ARQ array to determine if the reception of the fragment has filled up a hole in the ARQ array, as the ARQ array can be used to build the SDU. Block-by-block checking is then performed if the entry in the ARQ array is valid. If the entry is valid, the entry in the ARQ array is used to direct memory access (DMA) the data to the SDU buffer. If the indicator shows the SDU is complete, then the buffer is forwarded as a normal SDU. A new buffer is allocated if the indicator shows that the ARQ block forms the start of a new SDU. After the DMA transfer the entry in the array is nulled and the PDU reference count lowered by 1.

The uplink classification module 3745 and aggregation module 3750, upon the reception of SDU, forwards the SDU is to the NIC or management plane based on simple classification using the CID. The Ethernet interface lies between the NIC and the line Design for the downlink, carrying the payload.

### Object Switching and Arbitration

Another aspect of the present invention involves object switching and arbitration and is used in systems for intercommunication and to build recursive systems. This aspect can be used with any type of user equipment that can be connected to internet directly or indirectly for the purpose of communication. This aspect of the present invention provides a flexible and scalable architecture. Specifically, the underlying architecture for the Java Tools Language (JTL) solution is scalable and robust providing full support to the standard under development and testing which is subject to upgrades as and when the standards get consolidated. Referring to Figure 39, the architecture named Collaborative Computing Platform (CCP) is based on the following modules: Object Switch and Arbitrator (OSA); Object Library (OLIB); Thread controller (TCON).

The Object Switch Arbitrator (OSA) is the controller function that helps in startup and operation of the Collaborative Computing Platform (CCP) framework. All of the startup and operation logics are defined in the OSA, which in turn directs the TCON to take care of the operational issues of all the Object Libraries. The OSA has four interfaces, a network adaptor interface, object library interface, non-OLIB interface and lookup table interface. The OSA-to-network adaptor interface acts as a network access interface (NAI) to support TCP/IP and GPRS connections, and although this interface cannot be distributed, the interface can be duplicated to provide high availability. The OSA-to-OLIB interface provides access to OLIB software binaries placed in one or more servers. The libraries dealing with network and devices are called Network OLIB or NLIB. The OSA-to-Non-OLIB interface can be one or more interfaces that are 3rd party standard software used by the OSA to perform activities that are not implemented through any OLIB. The OSA-to-lookup table interface provides access to lookup tables, which can be a notepad with the details of all OLIBS and non-OLIBS repository. It may have fields like location of the OLIB, memory-size of the OLIB, startup procedure, configuration details, and physical location. Every OSA has to will have application configuration file, and by reading this file OSA will start various OLIB.

The OLIB is the feature object, which is invoked based on requirement of the system by the OSA through TCON. The decision about which OLIB is to be called and initiated is based on the configuration setting defined in the OLIB look-up table, which also defines the startup sequence of these OLIBs. An OLIB has an advertise function defining the prerequisites for startup, operation, shutdown and self-destruction. The OLIB also includes pre/post processing function code that consists of the functions for starting-up executables, configuring it, creating trouble tickets, management of OLIB and non-OLIBS, trigger activation/deactivation of other OLIB and non-OLIB, the executable itself and the byte code.

The thread controller (TCON) is the kernel to control all OLIBs and is distributed in all servers executing OLIB. The TCON takes care of system functionalities and acts as a super processor for all OLIBS and OSA. The TCON is controlled by the system administrator and is used for configuring various parameters and defining the look-up table. The TCON can command any OLIB to call the self-destroy function for graceful shutdown of a particular OLIB. TCON alarms, soft interrupts /alarms will be passed to the OSA or to OLIBs in case of any exceptions by TCON or any OLIB, e.g., when one process dies, the OLIB has to advertise its memory address so that a back up OLIB or an exception OLIB can take care of the handover. The look-up table also has an indication of what are the HA OLIBs. If nothing is available TCON after a time out will claim the job token using the self-destroy function.

This aspect can be implemented by following the above framework. Since the OSA and TCON remain more or less the same over time, the OLIBs can be developed and introduced as release for a particular service or an addition for the new service by defining the details of the OLIB in the look-up table. The architecture also has a built in functionality of introducing upgrades in an easy and reliable manner having the option to roll back without affecting the working of the system or having to spend effort on the same.

The foregoing disclosure has been set forth merely to illustrate the invention and is not intended to be limiting. Since modifications of the disclosed embodiments incorporating the substance of the invention may occur to persons skilled in the art, the invention should be construed to include everything within the scope of the appended claims.

## Claims

1. A method of communication, comprising:
sending, by a proxy call session control function module (204) in a first user equipment (202, 552) to a second user equipment (554), a Session Initiation Protocol, SIP, request for a communication session, wherein the request for a communication session is sent from an interrogating call session control function module in the first user equipment and which uses presence and availability information of the second user equipment; receiving, by the first user equipment from the second user equipment, an acceptance of the request to establish a communication session; and
establishing a media path for the communication session from the first user equipment to the second user equipment, wherein
prior to the sending, receiving and establishing, the method further comprises:
obtaining, by the first user equipment, presence and availability information regarding the second user equipment from an application server by
sending, from the proxy call session control function module in the first user equipment to a serving session control function module of the first user equipment, a presence subscription message;
forwarding, by the serving session control function module in the first user equipment, the presence subscription message to the application server;
receiving, by the serving session control function module in the first user equipment from the application server, the presence and availability information regarding the second user equipment; and forwarding, by the serving session control function module in the first user equipment to the proxy call session control function module in the first user equipment, the presence and availability information regarding the second user equipment,
the communication session is set up between the first and second user equipment independent of a network-based proxy call session control function (110, 550), and
the first and second user equipment are mobile telephones.

2. The method of claim 1, wherein a third user equipment (556) joins the communication session using network-based IMS proxy.

3. A system, comprising:
a first user equipment (202, 552) comprising an IP multimedia subsystem server; and
a second user equipment (554) comprising an IP multimedia subsystem server, wherein
the IP multimedia subsystem servers of the first and second user equipment each comprises:
a proxy call session control function module (204),
a serving session control function module (208),
an application server (210); and
an interrogating call session control function module (206),
the IP multimedia subsystem servers of the first and second user equipment are configured to establish a communication session independent of network-based IP multimedia subsystem servers,
the first and second user equipment are mobile telephones, and
the first user equipment is configured to:
send, by the proxy call session control function module in the first user equipment to the second user equipment, a Session Initiation Protocol SIP, request for a communication session, wherein the request for a communication session is sent from the interrogating call session control function module in the first user equipment and which uses presence and availability information of the second user equipment; receive, from the second user equipment, an acceptance of the request to establish a communication session; and
prior to said sending, said receiving and an establishing of a media path for the communication session from the first user equipment to the second user equipment, obtain presence and availability information regarding the second user equipment from an application server by:
sending, from said proxy call session control function module in the first user equipment to the serving session control function module of the first user equipment, a presence subscription message;
forwarding, by the serving session control function module in the first user equipment, the presence subscription message to the application server;
receiving, by the serving session control function module in the first user equipment from the application server, the presence and availability information regarding the second user equipment; and
forwarding, by the serving session control function module in the first user equipment to the proxy call session control function module in the first user equipment, the presence and availability information regarding the second user equipment.

4. A communication device (202), comprising:
an IP multimedia subsystem server configured to establish a communication session independent of network-based IP multimedia subsystem servers (110-116), wherein
the IP multimedia subsystem server comprises:
a proxy call session control function module (204);
an interrogating call session control function module (206);
a serving session control function module (208); and
an application server (210),
the communication device is a mobile telephone, and
said communication device is configured to:
send, by the proxy call session control function module in the communication device to another mobile telephone communication device, a Session Initiation Protocol, SIP, request for a communication session, wherein the request for a communication session is sent from the interrogating call session control function module in the communication device and which uses presence and availability information of the other communication device; receive, from the other communication device, an acceptance of the request to establish a communication session; and
prior to said sending, said receiving and an establishing of a media path for the communication session from the communication device to the other communication device, obtain presence and availability information regarding the other communication device from an application server by:
sending, from said proxy call session control function module in the communication device to the serving session control function module of the communication device, a presence subscription message;
forwarding, by the serving session control function module in the communication device, the presence subscription message to the application server;
receiving, by the serving session control function module in the communication device from the application server, the presence and availability information regarding the other communication device; and
forwarding, by the serving session control function module in the communication device to the proxy call session control function module in the communication device, the presence and availability information regarding the other communication device.

## Patentansprüche

1. Verfahren zur Kommunikation, das aufweist:
Senden einer Sitzungsinitiierungsprotokoll-Anforderung, SIP-Anforderung, für eine Kommunikationssitzung durch ein Proxy-Anrufsitzungssteuerungs-Funktionsmodul (204) in einem ersten Teilnehmergerät (202, 552) an ein zweites Teilnehmergerät (554), wobei die Anforderung für eine Kommunikationssitzung von einem abfragenden Anrufsitzungssteuerungs-Funktionsmodul in dem ersten Teilnehmergerät und das Anwesenheits- und Verfügbarkeitsinformationen des zweiten Teilnehmergeräts verwendet, gesendet wird;
Empfangen einer Annahme der Anforderung zum Aufbauen einer Kommunikationssitzung durch das erste Teilnehmergerät von dem zweiten Teilnehmergerät; und
Aufbauen eines Medienwegs für die Kommunikationssitzung von dem ersten Teilnehmergerät zu dem zweiten Teilnehmergerät, wobei
das Verfahren vor dem Senden, Empfangen und Aufbauen ferner aufweist:
Erhalten von Anwesenheits- und Verfügbarkeitsinformationen hinsichtlich des zweiten Teilnehmergeräts von einem Anwendungsserver durch das erste Teilnehmergerät, durch:
Senden einer Anwesenheitsabonnementnachricht von dem Proxy-Anrufsitzungssteuerungs-Funktionsmodul in dem ersten Teilnehmergerät an ein bedienendes Sitzungssteuerungs-Funktionsmodul des ersten Teilnehmergeräts;
Weiterleiten der Anwesenheitsabonnementnachricht an den Anwendungsserver durch das bedienende Sitzungssteuerungs-Funktionsmodul in dem ersten Teilnehmergerät;
Empfangen der Anwesenheits- und Verfügbarkeitsinformationen hinsichtlich des zweiten Teilnehmergeräts von dem Anwendungsserver durch das bedienende Sitzungssteuerungs-Funktionsmodul in dem ersten Teilnehmergerät; und
Weiterleiten der Anwesenheits- und Verfügbarkeitsinformationen hinsichtlich des zweiten Teilnehmergeräts durch das bedienende Sitzungssteuerungs-Funktionsmodul in dem ersten Teilnehmergerät an das Proxy-Anrufsitzungssteuerungs-Funktionsmodul in dem ersten Teilnehmergerät, wobei
die Kommunikationssitzung zwischen dem ersten und dem zweiten Teilnehmergerät unabhängig von einer netzbasierten Proxy-Anrufsitzungs-Steuerfunktion (110, 150) eingerichtet wird und das erste und das zweite Teilnehmergerät Mobiltelephone sind.

2. Verfahren nach Anspruch 1, wobei das dritte Teilnehmergerät (556) der Kommunikationssitzung unter Verwendung eines netzbasierten IMS-Proxys beitritt.

3. System, das aufweist:
ein erstes Teilnehmergerät (202, 552), das einen IP-Multimediateilsystemserver aufweist; und
ein zweites Teilnehmergerät (554), das einen IP-Multimediateilsystemserver aufweist, wobei
die IP-Multimediateilsystemserver des ersten und des zweiten Teilnehmergeräts jeweils aufweisen:
ein Proxy-Anrufsitzungssteuerungs-Funktionsmodul (204),
ein bedienendes Sitzungssteuerungs-Funktionsmodul (208),
einen Anwendungsserver (210); und
ein abfragendes Anrufsitzungssteuerungs-Funktionsmodul (206), wobei
die IP-Multimediateilsystemserver des ersten und des zweiten Teilnehmergeräts dafür konfiguriert sind, eine Kommunikationssitzung unabhängig von netzbasierten IP-Multimediateilsystemservern aufzubauen,
das erste und das zweite Teilnehmergerät Mobiltelephone sind, und
das erste Teilnehmergerät konfiguriert ist zum:
Senden einer Sitzungsinitiierungsprotokoll-Anforderung, SIP-Anforderung, für eine Kommunikationssitzung durch das Proxy-Anrufsitzungssteuerungs-Funktionsmodul in dem ersten Teilnehmergerät an das zweite Teilnehmergerät, wobei die Anforderung für eine Kommunikationssitzung von dem abfragenden Anrufsitzungssteuerungs-Funktionsmodul in dem ersten Teilnehmergerät und das Anwesenheits- und Verfügbarkeitsinformationen des zweiten Teilnehmergeräts verwendet, gesendet wird;
Empfangen einer Annahme der Anforderung zum Aufbauen einer Kommunikationssitzung von dem zweiten Teilnehmergerät; und
Erhalten von Anwesenheits- und Verfügbarkeitsinformationen hinsichtlich des zweiten Teilnehmergeräts von einem Anwendungsserver vor dem Senden, dem Empfangen und einem Aufbauen eines Medienwegs für die Kommunikationssitzung von dem ersten Teilnehmergerät zu dem zweiten Teilnehmergerät, durch:
Senden einer Anwesenheitsabonnementnachricht von dem Proxy-Anrufsitzungssteuerungs-Funktionsmodul in dem ersten Teilnehmergerät an das bedienende Sitzungssteuerungs-Funktionsmodul des ersten Teilnehmergeräts;
Weiterleiten der Anwesenheitsabonnementnachricht an den Anwendungsserver durch das bedienende Sitzungssteuerungs-Funktionsmodul in dem ersten Teil-nehmergerät;
Empfangen der Anwesenheits- und Verfügbarkeitsinformationen hinsichtlich des zweiten Teilnehmergeräts von dem Anwendungsserver durch das bedienende Sitzungssteuerungs-Funktionsmodul in dem ersten Teilnehmergerät; und
Weiterleiten der Anwesenheits- und Verfügbarkeitsinformationen hinsichtlich des zweiten Teilnehmergeräts durch das bedienende Sitzungssteuerungs-Funktionsmodul in dem ersten Teilnehmergerät an das Proxy-Anrufsitzungssteuerungs-Funktionsmodul in dem ersten Teilnehmergerät.

4. Kommunikationsvorrichtung (202), die aufweist:
einen IP-Multimediateilsystemserver, der dafür konfiguriert ist, eine Kommunikationssitzung unabhängig von netzbasierten IP-Multimediateilsystemservern (110-116) aufzubauen, wobei
der IP-Multimediateilsystemserver aufweist:
ein Proxy-Anrufsitzungssteuerungs-Funktionsmodul (204);
ein abfragendes Anrufsitzungssteuerungs-Funktionsmodul (206);
ein bedienendes Sitzungssteuerungs-Funktionsmodul (208); und
einen Anwendungsserver (210), wobei
die Kommunikationsvorrichtung ein Mobiltelephon ist, und
die Kommunikationsvorrichtung konfiguriert ist zum:
Senden einer Sitzungsinitiierungsprotokoll-Anforderung, SIP-Anforderung, für eine Kommunikationssitzung durch das Proxy-Anrufsitzungssteuerungs-Funktionsmodul in der Kommunikationsvorrichtung an eine andere Mobiltelephon-Kommunikationsvorrichtung, wobei die Anforderung für eine Kommunikationssitzung von dem abfragenden Anrufsitzungssteuerungs-Funktionsmodul in der Kommunikationsvorrichtung und das Anwesenheits- und Verfügbarkeitsinformationen der anderen Kommunikationsvorrichtung verwendet, gesendet wird;
Empfangen einer Annahme der Anforderung zum Aufbauen einer Kommunikationssitzung von der anderen Kommunikationsvorrichtung; und
Erhalten von Anwesenheits- und Verfügbarkeitsinformationen hinsichtlich der anderen Kommunikationsvorrichtung von einem Anwendungsserver vor dem Senden, dem Empfangen und einem Aufbauen eines Medienwegs für die Kommunikationssitzung von der Kommunikationsvorrichtung zu der anderen Kommunikationsvorrichtung, durch:
Senden einer Anwesenheitsabonnementnachricht von dem Proxy-Anrufsitzungssteuerungs-Funktionsmodul in der Kommunikationsvorrichtung an das bedienende Sitzungssteuerungs-Funktionsmodul der Kommunikationsvorrichtung;
Weiterleiten der Anwesenheitsabonnementnachricht an den Anwendungsserver durch das bedienende Sitzungssteuerungs-Funktionsmodul in der Kommunikationsvorrichtung;
Empfangen der Anwesenheits- und Verfügbarkeitsinformationen hinsichtlich der anderen Kommunikationsvorrichtung von dem Anwendungsserver durch das bedienende Sitzungssteuerungs-Funktionsmodul in der Kommunikationsvorrichtung; und
Weiterleiten der Anwesenheits- und Verfügbarkeitsinformationen hinsichtlich der anderen Kommunikationsvorrichtung durch das bedienende Sitzungssteuerungs-Funktionsmodul in der Kommunikationsvorrichtung an das Proxy-Anrufsitzungssteuerungs-Funktionsmodul in der Kommunikationsvorrichtung.

## Revendications

1. Procédé de communication, comprenant :
l'envoi, par un module de fonction de contrôle de session d'appel proxy (204) dans un premier équipement utilisateur (202, 552) vers un deuxième équipement utilisateur (554), d'une requête de protocole d'initiation de session, SIP, pour une session de communication, dans lequel la requête de session de communication est envoyée d'un module de fonction de contrôle de session d'appel interrogeant dans le premier équipement utilisateur et qui utilise des informations de présence et de disponibilité du deuxième équipement utilisateur ;
la réception, par le premier équipement utilisateur venant du deuxième équipement utilisateur, d'une acceptation de la requête d'établissement d'une session de communication ; et
l'établissement d'un trajet de média pour la session de communication depuis le premier équipement utilisateur vers le deuxième équipement utilisateur, dans lequel
avant l'envoi, la réception et l'établissement, le procédé comprend en outre :
l'obtention, par le premier équipement utilisateur, d'informations de présence et de disponibilité concernant le deuxième équipement utilisateur depuis un serveur d'application par
l'envoi, depuis le module de fonction de contrôle de session d'appel proxy dans le premier équipement utilisateur vers un module de fonction de contrôle de session de service du premier équipement utilisateur, d'un message d'abonnement de présence ;
la transmission, par le module de fonction de contrôle de session de service dans le premier équipement utilisateur, du message d'abonnement de présence vers le serveur d'application ;
la réception, par le module de fonction de contrôle de session de service dans le premier équipement utilisateur venant du serveur d'application, des informations de présence et de disponibilité relatives au deuxième équipement utilisateur ; et
la transmission, par le module de fonction de contrôle de session de service dans le premier équipement utilisateur vers le module de fonction de contrôle de session d'appel proxy dans le premier équipement utilisateur, des informations de présence et de disponibilité relatives au deuxième équipement utilisateur,
la session de communication est établie entre le premier et le deuxième équipement utilisateur indépendamment d'une fonction de contrôle de session d'appel proxy basé sur réseau (110, 550), et
les premier et deuxième équipements utilisateurs sont des téléphones mobiles.

2. Procédé selon la revendication 1, dans lequel un troisième équipement utilisateur (556) joint la session de communication en utilisant un proxy IMS basé sur réseau.

3. Système, comprenant :
un premier équipement utilisateur (202, 552) comprenant un serveur de sous-système multimédia IP ; et
un deuxième équipement utilisateur (554) comprenant un serveur de sous-système multimédia IP, dans lequel
les serveurs de sous-système multimédia IP des premier et deuxième équipements utilisateurs comprennent chacun :
un module de fonction de contrôle de session d'appel proxy (204),
un module de fonction de contrôle de session de service (208),
un serveur d'application (210) ; et
un module de fonction de contrôle de session d'appel interrogeant (206), les serveurs de sous-système multimédia IP des premier et deuxième équipements utilisateurs sont configurés pour établir une session de communication indépendamment de serveurs de sous-système multimédia IP basés sur réseau,
les premier et deuxième équipements utilisateurs sont des téléphones mobiles, et
le premier équipement utilisateur est configuré pour :
envoyer, par le module de fonction de contrôle de session d'appel proxy dans le premier équipement utilisateur vers le deuxième équipement utilisateur, une requête de session de communication, dans lequel la requête de session de communication est envoyée du module de fonction de contrôle de session d'appel interrogeant dans le premier équipement utilisateur et qui utilise des informations de présence et de disponibilité du second équipement utilisateur,
la réception, venant du second équipement utilisateur, d'une acception de la requête d'établissement d'une session de communication ; et
avant ledit envoi, ladite réception et un établissement d'un trajet de média pour la session de communication venant du premier équipement utilisateur vers le deuxième équipement utilisateur, l'obtention d'informations de présence et de disponibilité relatives au deuxième équipement utilisateur venant d'un serveur d'application par :
l'envoi, venant dudit module de fonction de contrôle de session d'appel proxy dans le premier équipement utilisateur vers le module de fonction de contrôle de session de service du premier équipement utilisateur d'un message d'abonnement de présence ;
la transmission, par le module de fonction de contrôle de session de service dans le premier équipement utilisateur, du message d'abonnement de présence vers le serveur d'application ;
la réception, par le module de fonction de contrôle de session de service dans le premier équipement utilisateur venant du serveur d'application, des informations de présence et de disponibilité relatives au second équipement utilisateur ; et
la transmission, par le module de fonction de contrôle de session de service dans le premier équipement utilisateur vers le module de fonction de contrôle de session d'appel proxy dans le premier équipement utilisateur, des informations de présence et de disponibilité relatives au deuxième équipement utilisateur.

4. Dispositif de communication (202), comprenant :
un serveur de sous-système multimédia IP configuré pour établir une session de communication indépendamment des serveurs sous-système multimédia IP basés sur réseau (110-116) dans lequel
le serveur de sous-système multimédia IP comprend :
un module de fonction de contrôle de session d'appel proxy (204) ;
un module de fonction de contrôle de session d'appel interrogeant (206) ;
un module de fonction de contrôle de session de service (208) ; et
un serveur d'application (210),
le dispositif de communication est un téléphone mobile, et
ledit dispositif de communication est configuré pour :
envoyer, par le module de fonction de contrôle de session d'appel proxy dans le dispositif de communication vers un autre dispositif de communication de téléphone mobile, une requête de protocole d'initiation de session, SIP, pour une session de communication, dans lequel la requête de session de communication est envoyée depuis le module de fonction de contrôle de session d'appel interrogeant dans le dispositif de communication et qui utilise les informations de présence et de disponibilité de l'autre dispositif de communication ;
recevoir, de l'autre dispositif de communication, une acceptation de la requête d'établissement d'une session de communication ; et
avant ledit envoi, ladite réception et un établissement d'un trajet de média pour la session de communication du dispositif de communication vers l'autre dispositif de communication, obtenir des informations de présence et de disponibilité concernant l'autre dispositif de communication d'un serveur d'application par :
l'envoi, venant du module de fonction de contrôle de session d'appel proxy dans le dispositif de communication vers le module de fonction de contrôle de session de service, d'un message d'abonnement de présence ;
la transmission, par le module de fonction de contrôle de session de service dans le dispositif de communication, du message d'abonnement de présence vers le serveur d'application ;
la réception, par le module de fonction de contrôle de session de service dans le dispositif de communication venant du serveur d'application, des informations de présence et de disponibilité concernant l'autre dispositif de communication ; et
la transmission, par le module de fonction de contrôle de session de service dans le dispositif de communication vers le module de fonction de contrôle de session d'appel proxy dans le dispositif de communication, des informations de présence et de disponibilité concernant l'autre dispositif de communication.
